(19) Europäisches Patentamt
European Patent Office
Office européen des brevets

(11) EP 3 182 829 B1

(12) EUROPEAN PATENT SPECIFICATION

(45) Date of publication and mention of the grant of the patent:
**21.10.2020 Bulletin 2020/43**

(21) Application number: **15753018.9**

(22) Date of filing: **18.08.2015**

(51) Int Cl.:
***A21D 2/26*** (2006.01) ***A21D 8/04*** (2006.01)
***A21D 10/00*** (2006.01)

(86) International application number:
**PCT/EP2015/068916**

(87) International publication number:
**WO 2016/026842 (25.02.2016 Gazette 2016/08)**

# (54) COMBINATION OF GLUCOSE OXIDASES FOR IMPROVEMENTS IN BAKING

KOMBINATIONEN VON GLUCOSEOXIDASEN FÜR VERBESSERUNGEN BEIM BACKEN

COMBINAISON D'OXYDASES DE GLUCOSE POUR AMÉLIORER LA CUISSON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2014 CN 201410415233**
**03.09.2014 EP 14183379**
**06.10.2014 CN 201410523216**

(43) Date of publication of application:
**28.06.2017 Bulletin 2017/26**

(73) Proprietor: **DSM IP Assets B.V.**
**6411 TE Heerlen (NL)**

(72) Inventors:
- **DIAS PERES, José**
  **NL-6100AA Echt (NL)**
- **BENSCHOP, VAN, Caroline, Hendrine, Maria**
  **NL-6100AA Echt (NL)**
- **ONG, Soon Hee**
  **NL-6100AA Echt (NL)**
- **STRUBBE, Lambertus, Gerhard**
  **NL-6100AA Echt (NL)**

(74) Representative: **DSM Intellectual Property**
**P.O. Box 4**
**6100 AA Echt (NL)**

(56) References cited:
**WO-A1-2009/130306 CN-A- 103 981 159**
**US-A- 5 834 280 US-A1- 2013 122 149**

- **ZHAOWEI GAO ET AL: "High-level expression of theglucose oxidase gene inusing codon optimization", BIOTECHNOLOGY LETTERS, SPRINGER NETHERLANDS, DORDRECHT, vol. 34, no. 3, 4 November 2011 (2011-11-04), pages 507-514, XP035011913, ISSN: 1573-6776, DOI: 10.1007/S10529-011-0790-6**
- **Jagdish Singh ET AL: "Glucose oxidase from Aspergillus niger: Production, characterization and immobilization for glucose oxidation", Advances in Applied Science Research, 2013, pages 250-257, XP055161878, Retrieved from the Internet: URL:http://pelagiaresearchlibrary.com/advances-in-applied-science/vol4-iss3/AASR-2013-4-3-250-257.pdf [retrieved on 2015-01-14]**
- **Y. MENG ET AL: "Production and characterization of recombinant glucose oxidase from Aspergillus niger expressed in Pichia pastoris", LETTERS IN APPLIED MICROBIOLOGY, vol. 58, no. 4, 2 January 2014 (2014-01-02), pages 393-400, XP055161632, ISSN: 0266-8254, DOI: 10.1111/lam.12202**
- **MOUNA KRIAA ET AL: "Purification, biochemical characterization and antifungal activity of a novel Aspergillus tubingensis glucose oxidase steady on broad range of pH and temperatures", BIOPROCESS AND BIOSYSTEMS ENGINEERING, vol. 38, no. 11, 18 August 2015 (2015-08-18), pages 2155-2166, XP055222144, DE ISSN: 1615-7591, DOI: 10.1007/s00449-015-1455-y**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 182 829 B1

- **KAROLIEN DECAMPS ET AL: "Glucose and pyranose oxidase improve bread dough stability", JOURNAL OF CEREAL SCIENCE, ACADEMIC PRESS LTD, GB, vol. 55, no. 3, 27 January 2012 (2012-01-27), pages 380-384, XP028413956, ISSN: 0733-5210, DOI: 10.1016/J.JCS.2012.01.007 [retrieved on 2012-02-03]**

SEQUENCE LISTING

<110> DSM IP Assets B.V.

<120> Glucose oxidases for improvements in baking

<130> 30265-WO-PCT

<160> 3

<170> BiSSAP 1.2

<210> 1
<211> 604
<212> PRT
<213> penicillium chrysogenum

<220>
<221> SIGNAL
<222> 1..18

<400> 1

```
Met Lys Ser Thr Ile Ile Thr Ser Ile Leu Phe Ser Val Ala Ala Val
1               5                   10                  15
Gln Ala Tyr Ser Pro Ala Glu Gln Ile Asp Val Gln Ser His Leu Leu
            20                  25                  30
Ser Asp Pro Thr Lys Val Glu Gly Glu Thr Tyr Asp Tyr Val Ile Ala
        35                  40                  45
Gly Gly Gly Leu Thr Gly Leu Thr Val Ala Ala Lys Leu Ser Glu Asn
    50                  55                  60
Pro Lys Ile Lys Val Leu Val Ile Glu Lys Gly Phe Tyr Glu Ser Asn
65                  70                  75                  80
Asp Gly Pro Ile Ile Glu Asp Pro Asn Ala Tyr Gly Glu Ile Phe Gly
                85                  90                  95
Thr Ser Val Asp Gln Asn Tyr Leu Thr Val Pro Leu Ile Asn Asn Arg
            100                 105                 110
Thr Gly Glu Ile Lys Ser Gly Leu Gly Leu Gly Gly Ser Thr Leu Ile
        115                 120                 125
Asn Gly Asp Ser Trp Thr Arg Pro Asp Lys Val Gln Ile Asp Ser Trp
    130                 135                 140
Glu Lys Val Phe Gly Met Glu Gly Trp Asn Trp Asp Asn Val Phe Gln
145                 150                 155                 160
Tyr Met Gln Lys Ala Glu Arg Ser Arg Pro Pro Thr Ala Ala Gln Ile
                165                 170                 175
Glu Ala Gly His Phe Tyr Asp Pro Ala Cys His Gly Thr Asp Gly Thr
            180                 185                 190
Val His Ala Gly Pro Arg Asp Asn Gly Lys Pro Trp Ser Pro Leu Met
        195                 200                 205
Arg Ala Leu Met Asn Thr Val Ser Ala Phe Gly Val Pro Val Gln Lys
    210                 215                 220
Asp Phe His Cys Gly His Pro Arg Gly Val Ser Met Ile Pro Asn Asn
225                 230                 235                 240
Leu His Glu Asn Gln Ile Arg Ala Asp Ala Ala Arg Glu Trp Leu Leu
                245                 250                 255
Pro Asn Tyr Gln Arg Asp Asn Leu Gln Ile Leu Thr Gly Gln Lys Val
            260                 265                 270
Gly Lys Val Leu Phe Asn Gln Thr Ala Ser Gly Pro Lys Ala Val Gly
        275                 280                 285
Val Asn Phe Gly Thr Asn Lys Ala Val Asn Phe Asn Val Tyr Ala Lys
    290                 295                 300
Gln Glu Val Leu Leu Ala Ala Gly Ser Ala Ile Ser Pro Leu Ile Leu
305                 310                 315                 320
```

```
Glu Tyr Ser Gly Ile Gly Ile Lys Ser Val Leu Asp Lys Ala Gly Val
                325                 330                 335
Lys Gln Leu Leu Glu Leu Pro Val Gly Leu Asn Met Gln Asp Gln Thr
            340                 345                 350
Thr Thr Thr Val Arg Ser Arg Ala Asn Asn Ala Pro Gly Gln Gly Gln
        355                 360                 365
Ala Ala Tyr Phe Ala Asn Phe Thr Glu Val Leu Gly Asp His Ala Ala
    370                 375                 380
Gln Gly Ile Lys Leu Leu Asp Thr Lys Leu Asp Gln Trp Ala Glu Glu
385                 390                 395                 400
Thr Val Ala Arg Gly Gly Phe His Asn Val Thr Ala Leu Lys Ile Gln
                405                 410                 415
Tyr Glu Asn Tyr Arg Asn Trp Leu Leu Asp Glu Asp Val Ala Phe Ala
            420                 425                 430
Glu Leu Phe Phe Asp Thr Glu Gly Lys Ile Asn Phe Asp Ile Trp Asn
        435                 440                 445
Leu Ile Pro Phe Thr Arg Gly Ser Val His Ile Leu Ser Ser Asp Pro
    450                 455                 460
Tyr Leu Trp Gln Tyr Ala Asn Asp Pro Lys Phe Phe Met Asn Glu Leu
465                 470                 475                 480
Asp Leu Leu Gly Gln Ala Ala Ala Thr Lys Leu Gly Arg Glu Leu Ser
                485                 490                 495
Ser Ala Gly Glu Met Lys Lys Tyr Tyr Ala Gly Glu Thr Ile Pro Gly
            500                 505                 510
Asp Asn Leu Pro Gln Asp Ala Thr Val Glu Gln Trp Glu Asp Tyr Val
        515                 520                 525
Met Met Asn Phe Arg Pro Asn Trp His Ala Val Ser Thr Cys Ser Met
    530                 535                 540
Met Ser Arg Glu Leu Gly Gly Val Val Asp Ala Thr Ala Lys Val Tyr
545                 550                 555                 560
Gly Thr Gln Gly Leu Arg Val Ile Asp Gly Ser Ile Pro Pro Thr Gln
                565                 570                 575
Val Ser Ser His Val Met Thr Val Phe Tyr Gly Met Ala Leu Arg Ile
            580                 585                 590
Ala Glu Ser Val Leu Glu Asp Tyr Ala Lys Lys Ala
        595                 600
```

<210> 2
<211> 1816
<212> DNA
<213> penicillium chrysogenum

<220>
<221> source
<222> 1..1816
<223> /organism="penicillium chrysogenum" /mol_type="unassigned DNA"

<220>
<221> SIGNAL
<222> 1..54

<220>
<221> terminator
<222> 1813..1816

<400> 2

atgaagtcca ctattatcac ctccattctc ttctctgtgg ctgccgtcca ggcctatagc 60
ccggccgagc agatcgacgt ccagtctcac ctgctttctg accccaccaa ggtcgaggga 120
gagacttacg actatgtcat tgctggtggt ggtttgactg gtctgaccgt ggctgccaag 180
ctgtctgaaa acccgaagat caaagtcctt gtgattgaga agggattcta cgaatccaac 240
gatggaccga tcatcgagga ccccaacgcc tatggggaga tctttggaac tagtgtggat 300
cagaattatc tcacagttcc cctcatcaac aaccgaactg gggaaattaa gtctggcctc 360
ggtcttggtg gctcgacctt gatcaacggc gattcctgga cccgccccga caaggtccag 420
atcgactcat gggaaaaggt ctttggcatg gagggctgga actgggacaa tgtcttccag 480
tacatgcaga aagctgagcg ctcgcgcccc ccgactgccg cccagattga agccggtcac 540
ttctacgacc ctgcctgtca tggaacagac ggaaccgttc atgccggccc tcgcgacaac 600
ggcaagcctt ggtccccact gatgcgagcc ctcatgaaca ccgtctccgc tttcggtgtc 660
cccgtccaga aggacttcca ctgcggtcac ccccgtggtg tctcgatgat cccgaacaac 720
ctccatgaga accagatccg ggctgatgcc gctcgcgaat ggcttcttcc caactaccag 780
cgcgataacc tgcagatcct gactggccag aaggtcggaa aggttttgtt caaccagacc 840
gcatctggac ctaaggctgt tggtgtgaac ttcggtacca acaaggctgt taacttcaat 900
gtctacgcca agcaagaagt tctgttggcc gccggatctg ccatttctcc tttgatcctt 960
gaatactccg gtattggtat caagtccgtc cttgacaagg ccggtgttaa gcagctcctc 1020
gaactccctg ttggtctcaa catgcaagac cagaccacta ccactgttcg gtcccgcgcc 1080
aacaacgcac ctggacaagg ccaggccgct tactttgcca acttcaccga ggttctcggc 1140
gaccacgccg cccagggtat taagttgctg gacaccaagc ttgaccagtg ggccgaggag 1200
accgttgccc gcggtggctt ccacaatgtg actgccctca agatccagta tgagaactac 1260
cgtaactggc tccttgatga ggacgttgca tttgccgagc tcttcttcga cactgagggc 1320
aagatcaact ttgatatctg gaatcttatc cccttcactc gcggttccgt ccacatcctc 1380
agcagtgacc cttacctctg gcaatacgca aatgacccca agttcttcat gaacgagctg 1440
gatcttctcg gccaggccgc tgctactaag ctgggtcgtg agctctctag cgctggtgag 1500
atgaagaagt actacgctgg cgagaccatc cccggcgaca acctgcccca ggatgccacc 1560
gtcgagcagt gggaggacta cgtgatgatg aacttccgtc ctaactggca cgctgttagc 1620
acctgctcta tgatgtcccg cgagcttggt ggtgtcgtcg acgctactgc caaggtctac 1680
ggtactcagg gcctccgtgt cattgacgga tctatccctc ccactcaggt gtcctctcac 1740
gttatgaccg ttttctacgg tatggccttg cggatcgccg aatccgtcct tgaagactat 1800
gccaagaaag cttaaa 1816

<210> 3
<211> 605
<212> PRT
<213> Aspergillus tubingensis

<400> 3

```
Met Gln Thr Leu Phe Val Ser Ser Leu Val Val Ser Leu Ala Ala Ala
1               5                   10                  15
Leu Pro His Tyr Ile Arg Ser Asn Gly Ile Glu Ala Ser Leu Leu Thr
            20                  25                  30
Asp Pro Lys Glu Val Ala Gly Arg Thr Val Asp Tyr Ile Ile Ala Gly
        35                  40                  45
Gly Gly Leu Thr Gly Leu Thr Thr Ala Ala Arg Leu Thr Glu Asn Pro
    50                  55                  60
Asp Ile Thr Val Leu Val Ile Glu Ser Gly Ser Tyr Glu Ser Asp Arg
65                  70                  75                  80
Gly Pro Ile Ile Glu Asp Leu Asn Ala Tyr Gly Asp Ile Phe Gly Ser
                85                  90                  95
Ser Val Asp His Ala Tyr Glu Thr Val Glu Leu Ala Thr Asn Asn Gln
            100                 105                 110
Thr Ala Leu Ile Arg Ser Gly Asn Gly Leu Gly Gly Ser Thr Leu Val
        115                 120                 125
Asn Gly Gly Thr Trp Thr Arg Pro His Lys Ala Gln Val Asp Ser Trp
    130                 135                 140
Glu Thr Val Phe Gly Asn Glu Gly Trp Asn Trp Asp Ser Val Ala Ala
145                 150                 155                 160
Tyr Ser Leu Gln Ala Glu Arg Ala Arg Ala Pro Asn Ala Lys Gln Ile
                165                 170                 175
Ala Ala Gly His Tyr Phe Asn Ala Ser Cys His Gly Ile Asn Gly Thr
            180                 185                 190
Val His Ala Gly Pro Arg Asp Thr Gly Asp Asp Tyr Ser Pro Ile Val
        195                 200                 205
Lys Ala Leu Met Ser Ala Val Glu Asp Arg Gly Val Pro Thr Lys Lys
    210                 215                 220
Asp Leu Gly Cys Gly Asp Pro His Gly Val Ser Met Phe Pro Asn Thr
225                 230                 235                 240
Leu His Glu Asp Gln Val Arg Ser Asp Ala Ala Arg Glu Trp Leu Leu
                245                 250                 255
Pro Asn Tyr Gln Arg Pro Asn Leu Gln Val Leu Thr Gly Gln Tyr Val
            260                 265                 270
Gly Lys Val Leu Leu Ser Gln Asn Ala Thr Thr Pro Arg Ala Val Gly
        275                 280                 285
Val Glu Phe Gly Thr His Lys Gly Asn Thr His Asn Val Tyr Ala Lys
    290                 295                 300
His Glu Val Leu Leu Ala Ala Gly Ser Ala Val Ser Pro Thr Ile Leu
305                 310                 315                 320
Glu Tyr Ser Gly Ile Gly Met Lys Ser Ile Leu Glu Pro Leu Gly Ile
                325                 330                 335
Asp Thr Val Val Asp Leu Pro Val Gly Leu Asn Leu Gln Asp Gln Thr
            340                 345                 350
Thr Ser Thr Val Arg Ser Arg Ile Thr Ser Ala Gly Ala Gly Gln Gly
        355                 360                 365
Gln Ala Ala Trp Phe Ala Thr Phe Asn Glu Thr Phe Gly Asp Tyr Ala
    370                 375                 380
Glu Lys Ala His Glu Leu Leu Asn Thr Lys Leu Glu Gln Trp Ala Glu
385                 390                 395                 400
Glu Ala Val Ala Arg Gly Gly Phe His Asn Thr Thr Ala Leu Leu Ile
                405                 410                 415
Gln Tyr Glu Asn Tyr Arg Asp Trp Ile Val Lys Asp Asn Val Ala Tyr
            420                 425                 430
Ser Glu Leu Phe Leu Asp Thr Ala Gly Val Ala Ser Phe Asp Val Trp
        435                 440                 445
Asp Leu Leu Pro Phe Thr Arg Gly Tyr Val His Ile Leu Asp Lys Asp
    450                 455                 460
Pro Tyr Leu Arg His Phe Ala Tyr Asp Pro Gln Tyr Phe Leu Asn Glu
465                 470                 475                 480
Leu Asp Leu Leu Gly Gln Ala Ala Ala Thr Gln Leu Ala Arg Asn Ile
                485                 490                 495
```

```
Ser Asn Ser Gly Ala Met Gln Thr Tyr Phe Ala Gly Glu Thr Ile Pro
            500                 505                 510
Gly Asp Asn Leu Ala Tyr Asp Ala Asp Leu Ser Ala Trp Val Glu Tyr
        515                 520                 525
Ile Pro Tyr Asn Phe Arg Pro Asn Tyr His Gly Val Gly Thr Cys Ser
    530                 535                 540
Met Met Pro Lys Glu Met Gly Gly Val Val Asp Asn Ala Ala Arg Val
545                 550                 555                 560
Tyr Gly Val Gln Gly Leu Arg Val Ile Asp Gly Ser Ile Pro Pro Thr
                565                 570                 575
Gln Met Ser Ser His Val Met Thr Val Phe Tyr Ala Met Ala Leu Lys
            580                 585                 590
Ile Ala Asp Ala Ile Leu Ala Asp Tyr Ala Ser Met Gln
        595                 600                 605
```

## Description

### Field of the invention

The present invention relates to application of glucose oxidase in the baking industry.

### Background of the invention

Glucose oxidases (GOX) catalyze the oxidation of glucose and water into gluconic acid and hydrogen peroxide (H2O2) using atmospheric oxygen. For many years glucose oxidases have been used in the baking industry as processing aids in particular to strengthen the gluten network. Active oxygen in the hydrogen peroxide oxidizes thiol groups (SH-groups) in the gluten protein into disulfide bridges (cysteine), thus strengthening the dough made from the flour. Active oxygen in the hydrogen peroxide oxidizes the thiol groups (SH-groups) present in cysteine in the gluten protein into disulfide bridges (cystine), thus strengthening the dough made from the flour.

Flour having low protein content is usually classified as weak. The gluten of weak flour is very extensible under stress but does not return to its original dimensions when the stress is removed. Flour with high protein content is classified as strong. The gluten of strong flour is less extensible than that of weak flour. It is more resistant to mixing.

Strong flour is often preferred for baking purposes, since the rheological and handling properties of dough prepared from such flour are superior to those obtained with weak flour. In addition, the shape and texture of a bakery product prepared from strong flour are remarkably better as compared with weak flour.

A dough prepared from strong flour is also more stable as compared with that prepared from weak flour. This is one of the most important - if not the most important - properties in view of the baking process.

Although the stability of dough can be improved by glucose oxidase, the volume and texture of the baked product obtained from the dough usually do not suffice and stability improvements may not be effective under demanding circumstances.

### Summary of the invention

The present invention relates to the use of a composition comprising a combination of glucose oxidases for improving shock resistance of a dough, or the crumb structure of a baked product, wherein the composition comprises a *Penicillium* glucose oxidase which has an amino acid sequence having at least 75% identity to amino acids 19 to 604 of SEQ ID NO. 1 and an Aspergillus glucose oxidase comprising an amino acid sequence having at least 85% identity to the amino acid sequence as set out in SEQ ID NO: 3,
wherein shock resistance is determined as set forth in the description and
wherein an improved crumb structure includes a finer crumb structure as compared to a reference and is determined as set forth in the description.

In another aspect, the invention relates to a method for preparing a dough comprising combining a pre-mix or a flour comprising a *Penicillium* glucose oxidase which has at least 75% identity to amino acids 19 to 604 of SEQ ID NO: 1 and a second *Aspergillus* glucose oxidase, which has at least 85% identity to SEQ ID NO: 3, with at least one dough ingredient, wherein the at least one dough ingredient is selected from baker's yeast and a chemical leavening system.

### Description of the sequence listing

SEQ ID No.1 sets out the amino acid sequence of the *Penicillium* glucose oxidase used in the method according to the invention. Amino acids 1 to 18 represent the signal sequence used for secretion of the *Penicillium* glucose oxidase enzyme (amino acids 19 - 604).

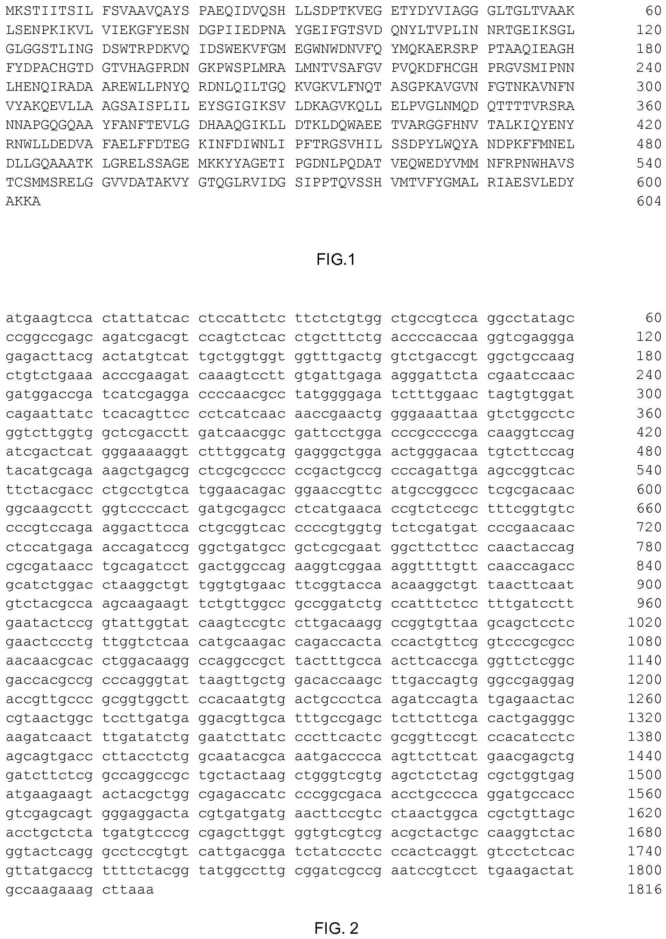

SEQ ID No.2 sets out the cDNA sequence encoding the *Penicillium* glucose oxidase depicted in Fig. 1. Nucleotides 1 to 54 encode the signal sequence, nucleotides 55 to 1816 encode the mature glucose oxidase, including a translational termination sequence (5'-TAAA-3') at the 3'-terminus.

SEQ ID No.3 sets out the amino acid sequence of an *Aspergillus* glucose oxidase.

### Short description of the figures

Figure 1. Amino acid sequence of the *Penicillium* glucose oxidase used in the method according to the invention. Amino acid sequence of the *Penicillium* glucose oxidase used in the invention. Amino acids 1 to 18 represent the signal sequence used for secretion of the glucose oxidase (amino acids 19 - 604).

Figure 2. cDNA sequence encoding the *Penicillium* glucose oxidase depicted in Fig.1. Nucleotides 1 to 54 encode the signal sequence, nucleotides 55 to 1816 encode the mature glucose oxidase, including a translational termination sequence (5'-TAAA-3') at the 3'-terminus.

Figure 3. Amino acid sequence of an *Aspergillus* glucose oxidase used in the invention.

## Detailed description of the invention

Throughout the present specification and the accompanying claims, the words "comprise", "include" and "having" and variations such as "comprises", "comprising", "includes" and "including" are to be interpreted inclusively. That is, these words are intended to convey the possible inclusion of other elements or integers not specifically recited, where the context allows.

The articles "a" and "an" are used herein to refer to one or to more than one (i.e. to one or at least one) of the grammatical object of the article. By way of example, "an element" may mean one element or more than one element.

Subject-matter or embodiments labelled as "disclosure" are not according to the present invention and not embraced in the scope of protection.

The present invention relates to the use of a composition comprising a combination of glucose oxidases for improving shock resistance of a dough, or the crumb structure of a baked product, wherein the composition comprises a *Penicillium* glucose oxidase which has an amino acid sequence having at least 75% identity to amino acids 19 to 604 of SEQ ID NO. 1 and an *Aspergillus* glucose oxidase comprising an amino acid sequence having at least 85% identity to the amino acid sequence as set out in SEQ ID NO: 3,

wherein shock resistance is determined as set forth in the description and

wherein an improved crumb structure includes a finer crumb structure as compared to a reference and is determined as set forth in the description..

In an aspect the invention relates to the said use, wherein the second glucose oxidase is an *Aspergillus* glucose oxidase comprising an amino acid sequence having at least 90% identity, or at least 95% identity, or at least 96% identity, or at least 97% identity, or at least 98% identity, or at least 99% identity, to the amino acid sequence as set out in SEQ ID NO: 3. In an aspect of said use the second glucose oxidase is an *Aspergillus* glucose oxidase comprising an amino acid sequence as set out in SEQ ID NO: 3.

In an aspect the invention relates to the use of a composition comprising a combination of glucose oxidases for improving shock resistance of a dough, wherein the composition comprises a *Penicillium* glucose oxidase which has an amino acid sequence having at least 75% identity to amino acids 19 to 604 of SEQ ID NO. 1 and an *Aspergillus* glucose oxidase comprising an amino acid sequence having at least 85% identity to the amino acid sequence as set out in SEQ ID NO: 3, wherein shock resistance is determined as set forth in the description.

The *Aspergillus* glucose oxidase may have an amino acid sequence having at least 95% identity, at least 96% identity, at least 97% identity, at least 98 % identity or at least 99% identity to the amino acid sequence as set out in SEQ ID NO: 3.

In an aspect the invention relates to a dough according to claim 3 comprising a *Penicillium* glucose oxidase having at least 75% identity to amino acids 19 to 604 of SEQ ID NO. 1 and a second glucose oxidase, wherein the second glucose oxidase is an *Aspergillus* glucose oxidase having at least 85% identity, or at least 90% identity, or at least 95% identity, or at least 96% identity, or at least 97% identity, or at least 98% identity, or at least 99% identity, to the amino acid sequence as set out in SEQ ID NO: 3, and at least one dough ingredient selected from baker's yeast and a chemical eavening system. In an aspect said dough comprises as the second glucose oxidase an *Aspergillus* glucose oxidase comprising an amino acid sequence as set out in SEQ ID NO: 3.

The invention further relates to dough according to claim 3 comprising a *Penicillium* glucose oxidase having an amino acid sequence as set out in amino acids 19 to 604 of SEQ ID NO. 1 and a second glucose oxidase, wherein the second glucose oxidase is an *Aspergillus* glucose oxidase having an amino acid sequence having at least 95% identity, at least 96% identity, at least 97% identity, at least 98 % identity or at least 99% identity to the amino acid sequence as set out in SEQ ID NO: 3, and at least one dough ingredient selected from baker's yeast and a chemical leavening system.

The disclosure relates to a method for increasing dough stability comprising the step of combining a *Penicillium* glucose oxidase, a second glucose oxidase and at least one dough ingredient.

In an aspect the disclosure relates to a method for increasing dough stability comprising the step of combining a *Penicillium* glucose oxidase, a second glucose oxidase and at least one dough ingredient wherein the *Penicillium* glucose oxidase comprises an amino acid sequence having at least 75% identity to amino acids 19 to 604 of SEQ ID NO. 1 and a second glucose oxidase, wherein the second glucose oxidase is an *Aspergillus* glucose oxidase comprising an amino acid sequence having at least 85% identity, or at least 90% identity, or at least 95% identity, or at least 96% identity, or at least 97% identity, or at least 98% identity, or at least 99% identity, to the amino acid sequence as set out in SEQ ID NO: 3. In an aspect of said method the second glucose oxidase is an *Aspergillus* glucose oxidase comprising an amino acid sequence as set out in SEQ ID NO: 3.

The disclosure also relates to a method for increasing dough stability comprising the step of combining at least one dough ingredient, a *Penicillium* glucose oxidase comprising an amino acid sequence as set out in amino acids 19 to 604 of SEQ ID NO. 1 and a second glucose oxidase, preferably wherein the second glucose oxidase is an *Aspergillus* glucose oxidase comprising an amino acid sequence having at least 95% identity, at least 96% identity, at least 97% identity, at least 98 % identity or at least 99% identity to the amino acid sequence as set out in SEQ ID NO: 3.

In an aspect the combination of glucose oxidases has a synergistic positive effect on the stability of the dough, and/or the volume of a baked product and/or the crumb structure of a baked product. In an aspect the combination of glucose oxidases has a synergistic positive effect on the stability, volume and crumb structure of a baked product. An improvement herein means as compared to a reference.

The reference is the situation not comprising the combination of glucose oxidases, e.g. use without the combination of glucose oxidases, a dough prepared without the combination of glucose oxidases, a flour not comprising the combination of glucose oxidases, a dough not comprising the combination of glucose oxidases, a baked product prepared without the combination of glucose oxidases.

In an aspect a comparison is made with the individual glucose oxidases. In an aspect the improvement is shown by the effect of the combination of glucose oxidases is more than the sum of the effect of a first glucose oxidase and the effect of the second glucose oxidase.

In an aspect the improvement is shown by the effect of a combination of an amount X of a first glucose oxidase and an amount Y of a second glucose oxidase being more than the effect of 2X of the first glucose oxidase.

In an aspect the improvement is shown by the effect of a combination of an amount X of a first glucose oxidase and an amount Y of a second glucose oxidase being more than the effect of 2Y of the second glucose oxidase.

In an aspect the improvement is shown by the effect of a combination of 5 ppm of a first glucose oxidase and 5 ppm a second glucose oxidase being more than the effect of 10 ppm of the first glucose oxidase.

For example the improvement may be shown by the effect of a combination of 5 ppm of a first glucose oxidase and 5 ppm a second glucose oxidase being more than the effect of 10 ppm of the second glucose oxidase.

For example the improvement may be shown by the effect of a combination of 10 ppm of a first glucose oxidase and 10 ppm a second glucose oxidase being more than the effect of 20 ppm of the first glucose oxidase. For example the improvement may be shown by the effect of a combination of 10 ppm of a first glucose oxidase and 10 ppm a second glucose oxidase being more than the effect of 20 ppm of the second glucose oxidase.

Ppm is herein is based on flour weight.

Stability herein is referring to stability of a dough. In the context of the present disclosure, the term "increased stability of the dough" means that the dough is less susceptible to forming faults as a consequence of a (mechanical) handing process and /or a freezing process as compared to a reference dough. This may be observed by the shaped dough maintaining better its shape during the time from before entering the oven until after baking.

Before entering the oven herein means of from half an hour before until 1 minute before entering the oven. In an aspect before entering the oven means of from 15 minutes before until 1 minute before entering the oven, in an aspect of from 5 minutes before until 2 minutes before entering the oven.

Alternatively the stability of the dough may be evaluated by determining the diameter to height (D:H) ratio of the product baked from the dough, which is the average diameter divided by the height.

$$\text{diameter to height (D:H) ratio} = \frac{\text{average diameter}}{\text{height}}$$

The average diameter is determined by measuring the diameter in one direction and adding to this the diameter perpendicular to the one direction and dividing the sum of the diameters by two. All diameters and heights are measured on the surface of the non-sliced (i.e. whole) product.The D:H ratio of a baked product prepared from a dough comprising a combination of glucose oxidases may be more favourable than the D:H ratio of a baked product prepared from a frozen dough not comprising a combination of glucose oxidases. This may been observed even after a long period of freezing of the dough. For rolls, a D:H ratio of 1.4-1.7 is favourable.

Stability of the dough may be evaluated by comparing the shape of the dough before it enters the oven and the shape of the baked product obtained after baking. Stability of the dough is improved if these shapes are more similar, i.e differ less from each other, than the corresponding shapes of the reference. This can for example be determined by comparing the diameter to height ratio (D:H) of the dough and the baked product made from the dough as described herein. If these ratios are similar, the shapes of the dough and the baked product are considered to be similar.

For a baked product baked on a plate (e.g. in a direct floor baking process) the stability of the dough may be evaluated by looking at the roundness of the base of the baked product. Whereby the base is the part of the dough or baked product that rests on the plate. A rounder shape of the base indicates a better stability of the dough. Alternatively stability of the dough may be evaluated by determining the contact area of the base of the baked product with a surface (e.g. floor plate) on which it rests, a smaller contact area indicates an increased stability of the dough.

Improved dough stability may be demonstrated by an improved shock resistance of a dough. Improved shock resistance of a dough may be demonstrated as follows. Bread tins filled with proofed dough are dropped from a certain drop-height, e.g. 9 cm height, just before they enter the oven to be baked. This may be done by simultaneously pulling away 2 blocks having this drop-height from below the bottom of the tin. This way the tin drops over the drop-height and the dough experiences a shock. The shock resistance of a dough is improved if, after baking the dough, the volume of the loaf is larger as compared to a reference loaf (which may also be called a control) loaf and/or the hardness of the loaf after baking the dough is lower as compared to a reference loaf (which may also be called a control).

In improved volume of the baked product herein means a larger volume of the baked product as compared to a reference product. The volume of the baked product may be determined by an automated bread volume analyser (such as an BVM-3, TexVol Instruments).

During preparation (e.g. mixing), fermentation and baking of the dough the cells are formed and developed to result in a crumb structure of a baked product. Crumb structure is important property of a baked product such as bread or cake is crumb structure. Crumb structure herein is used to describe the inside of a baked product such as bread or cake. Crumb structure is the way the cell structure of the crumb is formed, and the shape and size of the cells.

Different baked product applications benefit from a different crumb structure. There is therefore a need to improve the crumb structure of a baked product. In certain applications it is desired that the baked product has finer crumb structure.

Therefore an improved crumb structure herein includes a finer crumb structure as compared to a reference product.

Crumb structure may be evaluated for example by digital image analysis as known in the art (eg. C-cell, Calibre Control International Ltd, Appleton, Warrington, UK).

Crumb structure may be evaluated visually by a baker.

The following parameters may be used in evaluating crumb structure: area of holes, number of cells, average cell diameter, coarse/fine clustering. The parameter concerning evaluation of the crumb structure may be determined by digital analysis of a slice of baked product e.g. a slice of bread or cake.

In an aspect when comparing parameters of a baked product with a reference baked product, the parameter is normalized with respect to the total surface area of the reference slice of baked product that was analyzed. The total surface area of a slice of bread may be provided by the digital analysis apparatus or may be established by multiplying the height and the width of the slice involved.

In an aspect when comparing parameters of a baked product with a reference baked product, the parameter is normalized with respect to the volume of the reference baked product that was analyzed. The volume of the baked product may be determined by an automated bread volume analyser (such as an BVM-3, TexVol Instruments).

A finer crumb structure of a baked product may be shown by the area of holes, as determined by digital image analysis, being smaller than the area of holes of a reference baked product.

A finer crumb structure of a baked product may be shown by a smaller number of cells, as determined by digital image analysis, than the number of cells of a reference baked product.

A finer crumb structure of a baked product may be shown by a smaller average cell diameter, as determined by digital image analysis, than the average cell diameter of a reference baked product.

A finer crumb structure of a baked product may be shown by the average cell diameter of a baked product, as determined by digital image analysis, having a smaller standard deviation than a reference baked product

A finer crumb structure of a baked product may be shown by more uniform/homogenous distribution of cells as compared to a reference baked product.

A finer crumb structure of a baked product herein includes smaller cells, smaller holes and /or less holes as compared to a reference baked product.

In an aspect a finer crumb structure of a baked product herein includes smaller cells, smaller holes and less holes as compared to a reference baked product.

In an aspect a finer crumb structure of a baked product herein includes smaller cells, smaller holes, less holes and a more uniform/homogenous distribution of cells as compared to a reference baked product.

According to the invention a Penicillium glucose oxidase which has an amino acid sequence having at least 75% identity to amino acids 19 to 604 of SEQ ID NO. 1 and an Aspergillus glucose oxidase comprising an amino acid sequence having at least 85% identity to the amino acid sequence as set out in SEQ ID NO: 3 is used according to claim 1.

The second glucose oxidase is obtainable from an *Aspergillus* such as *Aspergillus niger Aspergillus awamori, Aspergillus foetidus, Aspergillus sojae, Aspergillus fumigatus, Aspergillus oryzae, Aspergillus tubingensis.* These glucose oxidases are referred to as *Aspergillus* glucose oxidase.

A *Penicillium* glucose oxidase for use according to the invention may be obtained by any suitable means. In one embodiment, it is isolated from a source, in particular a prokaryotic or eukaryotic microorganism, containing the enzyme. Suitable examples of microorganisms are mammalian, plant, fungal and algal microorganisms as mentioned below. In one embodiment, the *Penicillium* glucose oxidase is isolated from a *Penicillium* species, in particular from *Penicillium chrysogenum*. A *Penicillium* glucose oxidase is a *Penicillium* glucose oxidase having an amino acid sequence according to amino acids 19-604 of SEQ ID NO. 1, or a glucose oxidase with an amino acid sequence which shows at least 75% identity to amino acids 19-604 of SEQ ID No.1. In one embodiment, the glucose oxidase has an amino acid sequence which shows at least 80%, at least 85%, at least 90%, at least 95%, at least 97%, at least 98% or at least 99% identity to amino acids 19-604 of SEQ ID NO. 1.

In another embodiment, the *Penicillium* glucose oxidase is generated using standard molecular biology techniques to provide a glucose oxidase which would otherwise be obtainable from a *Penicillium* fungus, e.g. by *de novo* synthesis of a nucleotide sequence according to SEQ ID No. 2 or a nucleotide sequence which encodes a protein having an amino acid sequence having at least 75%, at least 80%, at least 85%, at least 90%, at least 95%, at least 97%, at least 98% or at least 99% identity to amino acids 19-604 of SEQ ID No.1. In one embodiment, a nucleotide sequence according to SEQ ID No. 2 is used. Such a nucleotide sequence may then be used for transformation of a host microorganism. In another embodiment, the *Penicillium* glucose oxidase is generated using site-saturation mutagenesis, scanning mutagenesis, insertional mutagenesis, random mutagenesis, site-directed mutagenesis, and directed-evolution of an existing glucose oxidase, e.g. of the one depicted in SEQ ID NO. 1, as well as various other recombination approaches known to a skilled person in the art. Glucose oxidases (EC 1.1.3.4) catalyse the oxidation of glucose into gluconic acid. The second glucose oxidase is an *Aspergillus* glucose oxidase comprising an amino acid sequence having at least 85% identity, or at least 90% identity, or at least 95% identity, or at least 96% identity, or at least 97% identity, or at least 98% identity, or at least 99% identity, to the amino acid sequence as set out in SEQ ID NO: 3. In an aspect the second glucose oxidase is an *Aspergillus* glucose oxidase comprising an amino acid sequence as set out in SEQ ID NO: 3.

In the context of the present invention, in order to determine the percentage of sequence identity of two amino acid sequences or of two nucleic acid sequences, the sequences are aligned for optimal comparison purposes. In order to optimize the alignment between the two sequences, gaps may be introduced in any of the two sequences that are compared. Such alignment is carried out over the full length of the sequences being compared. The sequence identity is the percentage of identical matches between the two sequences over the reported aligned region. Upon the alignment of two sequences, the resulting aligned amino acid positions are usually referred to as corresponding positions. The percent sequence identity between two amino acid sequences or between two nucleotide sequences may be determined using the Needleman and Wunsch algorithm for the alignment of two sequences. (Needleman, S. B. and Wunsch, C. D. (1970) J. Mol. Biol. 48, 443-453). Both amino acid sequences and nucleotide sequences can be aligned by the algorithm. The Needleman-Wunsch algorithm has been implemented in the computer program NEEDLE. For the purpose of this invention the NEEDLE program from the EMBOSS package was used (version 2.8.0 or higher, EMBOSS: The European Molecular Biology Open Software Suite (2000) Rice,P. Longden,I. and Bleasby,A. Trends in Genetics 16, (6) p. 276-277, http://emboss.bioinformatics.nl/). For protein sequences EBLOSUM62 is used for the substitution matrix. For nucleotide sequences, EDNAFULL is used. The optional parameters used are a gap-open penalty of 10 and a gap extension penalty of 0.5. The skilled person will appreciate that all these different parameters will yield slightly different results but that the overall percentage identity of two sequences is not significantly altered when using different algorithms.

After alignment by the program NEEDLE as described above the percentage of sequence identity between a query sequence and a sequence of the disclosure is calculated as follows: Number of corresponding positions in the alignment showing an identical amino acid or identical nucleotide in both sequences divided by the total length of the alignment after subtraction of the total number of gaps in the alignment. The identity as defined herein can be obtained from NEEDLE by using the NOBRIEF option and is labeled in the output of the program as "longest-identity".

The nucleic acid and protein sequences of the present disclosure can further be used as a "query sequence" to perform a search against public databases to, for example, identify other family members or related sequences. Such searches can be performed using the NBLAST and XBLAST programs (version 2.0) of Altschul, et al. (1990) J. Mol. Biol. 215:403-10. BLAST nucleotide searches can be performed with the NBLAST program, score = 100, word length = 12 to obtain nucleotide sequences similar to nucleic acid molecules of the disclosure. BLAST protein searches can be performed with the XBLAST program, score = 50, word length = 3 to obtain amino acid sequences similar to protein molecules of the disclosure. To obtain gapped alignments for comparison purposes, Gapped BLAST can be utilized as described in Altschul et al., (1997) Nucleic Acids Res. 25(17): 3389-3402. When utilizing BLAST and Gapped BLAST programs, the default parameters of the respective programs (e.g., XBLAST and NBLAST) can be used. See the homepage of the National Center for Biotechnology Information at http://www.ncbi.nlm.nih.gov/.

Any microorganism may be used as a recombinant host cell to produce the glucose oxidases, such as a *Penicillium* glucose oxidase, for use according to the invention. In one embodiment, the microorganism is a prokaryotic cell, such as a Gram-negative or Gram-positive bacterium. Suitable bacteria include *Escherichia, Anabaena, Caulobactert, Cyanobacteria, Gluconobacter, Rhodobacter, Pseudomonas, Paracoccus, Bacillus, Brevibacterium, Coryne-*

*bacterium, Rhizobium (Sinorhizobium), Flavobacterium, Klebsiella, Enterobacter, Lactobacillus, Lactococcus, Methylobacterium, Moraxella, Neisseria, Staphylococcus, Streptomyces* or *Thermoactinomyces.* In another embodiment, the microorganism is a eukaryotic cell, such as a mammalian cell, insect cell, plant cell, fungal cell or algal cell. Suitable examples of mammalian cells are CHO cells, COS cells, 293 cells, Per.C6® cells, and hybridomas. Suitable examples of insect cells include Sf9 and Sf21 cells and derivatives thereof. Suitable examples of fungal cells include yeast cells, such as *Candida, Hansenula, Kluyveromyces, Pichia, Saccharomyces, Schizosaccharomyces*, or *Yarrowia* strain; more preferably *Kluyveromyces lactis, S. cerevisiae, Hansenula polymorpha, Yarrowia lipolytica* and *Pichia pastoris*, or a filamentous fungi. Filamentous fungi include all filamentous forms of the subdivision Eumycota and Oomycota (as defined by Hawksworth et al., In, Ainsworth and Bisby's Dictionary of The Fungi, 8th edition, 1995, CAB International, University Press, Cambridge, UK). Filamentous fungal strains include strains of *Acremonium, Agaricus, Aspergillus, Aureobasidium, Chrysosporium, Coprinus, Cryptococcus, Filibasidium, Fusarium, Humicola, Magnaporthe, Mucor, Myceliophthora, Neocallimastix, Neurospora, Paecilomyces, Penicillium, Piromyces, Panerochaete, Pleurotus, Rasamsonia, Schizophyllum, Talaromyces, Thermoascus, Thielavia, Tolypocladium,* and *Trichoderma.* Preferred filamentous fungal cells belong to a species of an *Aspergillus, Chrysosporium, Myceliophthora, Penicillium, Talaromyces, Fusarium, Rasamsonia, Thermoascus* or *Trichoderma* genus, and most preferably a species of *Aspergillus niger, Aspergillus awamori, Aspergillus foetidus, Aspergillus sojae, Aspergillus fumigatus, Aspergillus oryzae, Fusarium oxysporum, Myceliophthora thermophila, Rasamsonia emersonii, Trichoderma reesei, Talaromyces emersonii, Thermoascus aurantiacus* or *Penicillium chrysogenum.* Algae is the group of unicellular and multicellular eukaryortic photosynthetic organisms, including microalgae, such as Dunaliella, Spirulina and Chlorella. In one embodiment, the recombinant host cell comprising a nucleotide sequence or a nucleic acid molecule according to the disclosure is an *Aspergillus, Bacillus, Chrysosporium, Escherichia, Kluyveromyces, Myceliophthora, Penicillium, Pseudomonas, Rasamsonia, Saccharomyces, Streptomyces* or *Talaromyces* species, preferably a *Bacillus subtilis, Bacillus amyloliquefaciens, Bacillus licheniformis, Escherichia coli, Aspergillus niger, Aspergillus oryzae, Myceliophthora thermophila, Rasamsonia emersonii or Trichoderma reesei* species. The recombinant host cell is preferably capable of expressing or overexpressing the glucose oxidase. The recombinant host cell may further comprise one or more modifications in its genome such that the recombinant microbial host cell is deficient in the production of at least one product selected from glucoamylase (glaA), acid stable alpha-amylase (amyA), neutral alpha-amylase (amyBI and amyBII), oxalic acid hydrolase (oahA), a toxin, preferably ochratoxin and/or fumonisin, a protease transcriptional regulator prtT, PepA, a product encoded by the gene hdfA and/or hdfB, a non-ribosomal peptide synthase *nps*E, *ags*E or *amy*C if compared to a parent host cell and measured under the same conditions. Suitable methods of producing said host cells include the ones described in WO2012/001169 and WO2014013074.

The glucose oxidases used in the present disclosure may be fusion proteins. Techniques for producing fusion polypeptides are known in the art, and include ligating the coding sequences encoding the polypeptides so that they are in frame. Expression of the fused polypeptide is under control of the same promoter(s) and terminator. The hybrid polypeptides may comprise a combination of partial or complete polypeptide sequences obtained from at least two different polypeptides wherein one or more may be heterologous to a host cell. Such fusion polypeptides from at least two different polypeptides may comprise a binding domain from one polypeptide, such as a starch binding domain or a carbohydrate binding domain, operably linked to a catalytic domain from a second polypeptide. Examples of fusion polypeptides and signal sequence fusions are for example as described in WO2010/121933, WO2013/007820 and WO2013/007821.

In the context of the present invention the term 'polypeptide' refers to a molecule which contains a backbone of a chain of at least ten amino acids, wherein the amino acids are covalently linked to each other by peptide bonds. These backbone amino acids groups may be linked to other groups, such as other amino acid sequences, sugar groups or lipid groups. The polypeptide may contain structural features, such as alpha-helices, beta-pleated sheets or disulphide bridges. The polypeptides used according to the present invention are as defined in the claims. A polypeptide may comprise a catalytic domain and one or more binding domains, such as a starch or carbohydrate binding domain. In the context of the present invention, the amino acid sequence is also referred to as 'polypeptide sequence' or 'protein sequence'. The term 'polypeptide' includes proteins.

In the Figures and in other places of the description of the present invention, the one letter code for amino acids is used, where A stands for Alanine, I for Isoleucine, L for Leucine, V for Valine, S for Serine, G for Glycine, P for Proline, Q for Glutamine, E for Glutamic acid, R for Arginine, D for Aspartic acid, K for Lysine, N for Asparagine, Y for Tyrosine, H for Histidine, F for Phenylalanine, C for Cysteine, T for Threonine. In the one letter code for amino acids M stands for Methionine, W for Tryptophan. Such one letter codes are commonly known in the art, see e.g. Sambrook, et al. (Molecular Cloning: A Laboratory Manual, 2nd ed. Cold Spring Harbor Laboratory, Cold Spring Harbor Laboratory Press, Cold Spring Harbor, NY, 1989).

The glucose oxidases for use according to the invention are comprised in a composition. The composition may comprise between 0.001% and 100% w/w of glucose oxidases based on total protein. Preferably, the composition comprises between 1% and 70% w/w of glucose oxidases based on total protein. In one embodiment, the composition comprises between 1% and 50% w/w of glucose oxidases based on total protein. In yet another embodiment, the composition comprises between 1% and 30% w/w of glucose oxidases based on total protein. In yet another embodiment, the composition comprises between 5% and 20% w/w of glucose oxidases based on total protein. The glucose oxidases in the composition may be present in any suitable ratio. In one embodiment, the composition comprises two different glucose oxidases which are present in equal amounts, based on ppm. In another embodiment, the composition comprises two different glucose oxidases which are present in a ratio of between 1:10 and 10:1, such as 2:3 or 3:2, or 1:2 or 2:1 or 1:5 or 5:1, based on ppm.

The glucose oxidases for use according to the invention are comprised in a composition. The composition may comprise between 0.001% and 100% w/w of glucose oxidases based on total enzyme protein. Preferably, the composition comprises between 1% and 70% w/w of glucose oxidases based on total enzyme protein. In one embodiment, the composition comprises between 1% and 50% w/w of glucose oxidases based on total enzyme protein. In yet another embodiment, the composition comprises between 1% and 30% w/w of glucose oxidases based on total enzyme protein. In yet another embodiment, the composition comprises between 5% and 20% w/w of glucose oxidases based on total enzyme protein. The glucose oxidases in the composition may be present in any suitable ratio. In one embodiment, the composition comprises two different glucose oxidases which are present in equal amounts, based on ppm. In another embodiment, the composition comprises two different glucose oxidases which are present in a ratio of between 1:10 and 10:1, such as 2:3 or 3:2, or 1:2 or 2:1 or 1:5 or 5:1, based on ppm. Total enzyme protein refers to all enzyme protein present in the composition.

In one embodiment of the disclosure, the glucose oxidases are the only enzymatic components in the composition. In another embodiment of the disclosure, the composition comprises a combination of glucose oxidases and at least one additional enzymatic activity. The at least one additional enzyme activity may be selected from enzymes like a protease, such as a endoprotease or an exoprotease; a peptidase, such as an exopeptidase or an endopeptidase; a lipolytic enzyme, such as a triacyl glycerol lipase, a phospholipase, a galactolipase or an enzyme having both phospholipase and galactolipase activity; or a carbohydrase, such as a cellulase, a hemicellulase, in particular a pentosanase such as a xylanase; a cross-linking enzyme, such as a transglutaminase; a maltogenic alpha amylase; an alpha amylase; a beta amylase; an amyloglucosidase, an oxidase, such as a sulfhydryl oxidase, a pyranose oxidase; a peroxidase, a hexose oxidase, a laccase; a protein disulfide isomerase; an asparaginase. The composition may suitably be used as flour improving composition.

In one embodiment, the flour improving composition further comprises one or more components selected from the group consisting of milk powder, gluten, granulated fat, an additional enzyme, an amino acid, a salt, an oxidant such as ascorbic acid, bromate and azodicarbonamide; a reducing agent such as L-cysteine, an emulsifier such as monoglycerides, di-glycerides, glycerol monostearate, sodium stearoyl lactylate, calcium stearoyl lactylate, polyglycerol esters of fatty acids and diacetyl tartaric acid esters of mono- and diglycerides, gums such as guar gum and xanthan gum, flavours, acids such as citric acid and propionic acid, starch, modified starch, gluten, humectants such as glycerol, and preservatives. The flour improving composition may comprise propylene glycerol monostearate. In another embodiment, the composition comprises comprises a lipolytic enzyme, preferably a phospholipase.

The composition comprising a combination of glucose oxidases, such as a *Penicillium* glucose oxidase and a second glucose oxidase, may be formulated in any suitable form. In one embodiment, the composition comprising *Penicillium* glucose oxidase, such as a *Penicillium* glucose oxidase comprising an amino acid sequence which shows at least 75%, at least 80%, at least 85%, at least 90%, at least 95%, at least 97%, at least 98% or at least 99% identity to amino acids 19-604 of SEQ ID NO. 1, and a second glucose oxidase, such as a fungal or *Aspergillus* glucose oxidase is formulated in a dry form, such as a freeze-dried or spray-dried powder or a granulate. In another embodiment, the composition according to the disclosure is in liquid form, such as in the form of an emulsion, a suspension or a solution. In yet another embodiment, the composition according to the disclosure is a paste or a gel.

In an aspect the composition comprising a combination of glucose oxidases comprises a *Penicillium* glucose oxidase.

In an aspect of the composition comprising a combination of glucose oxidases, at least one of the glucose oxidases is *Penicillium* glucose oxidase comprising an amino acid sequence having at least 75% identity to amino acids 19 to 604 of SEQ ID NO. 1 and a second glucose oxidase, and a second glucose oxidase is an *Aspergillus* glucose oxidase comprising an amino acid sequence having at least 85% identity, or at least 90% identity, or at least 95% identity, or at least 96% identity, or at least 97% identity, or at least 98% identity, or at least 99% identity, to the amino acid sequence as set out in SEQ ID NO: 3. In an aspect of said composition the second glucose oxidase is an *Aspergillus* glucose oxidase comprising an amino acid sequence as set out in SEQ ID NO: 3.

In an aspect of the composition comprising a combination of glucose oxidases, at least one of the glucose oxidases is *Penicillium* glucose oxidase comprising an amino acid sequence as set out in amino acids 19 to 604 of SEQ ID NO. 1 and a second glucose oxidase, wherein the second glucose oxidase is an *Aspergillus* glucose oxidase comprising an amino acid sequence having at least 95% identity, at least 96% identity, at least 97% identity, at least 98 % identity or at least 99% identity to the amino acid sequence as set out in SEQ ID NO: 3.

The glucose oxidases may be included in a flour or pre-mix to obtain a flour or pre-mix which comprises a combination of glucose oxidases and which conveys improved properties to a dough made therefrom. Therefore, in another aspect, the present disclosure relates to a flour or pre-mix comprising a combination of glucose oxidases, such as a *Penicillium* glucose oxidase and a second glucose oxidase. The *Penicillium* glucose oxidase may be a *Penicillium* glucose oxidase comprising an amino acid sequence which shows at least 75%, at least 80%, at least 85%, at least 90%, at least 95%, at least 97%, at least 98% or at least 99% identity to amino acids 19-604 of SEQ ID NO. 1. The second glucose oxidase may suitably be a fungal, such as a filamentous fungal, or *Aspergillus* glucose oxidase. In an aspect the second glucose oxidase is an *Aspergillus* glucose oxidase comprising an amino acid sequence having at least 85% identity, or at least 90% identity, or at least 95% identity, or at least 96% identity, or at least 97% identity, or at least 98% identity, or at least 99% identity, to the amino acid sequence as set out in SEQ ID NO: 3.

In an aspect the flour comprising a combination of glucose oxidases comprises a *Penicillium* glucose oxidase.

In an aspect of the flour comprising a combination of glucose oxidases, at least one of the glucose oxidases is *Penicillium* glucose oxidase comprising an amino acid sequence having at least 75% identity to amino acids 19 to 604 of SEQ ID NO. 1 and a second glucose oxidase, and a second glucose oxidase is an *Aspergillus* glucose oxidase comprising an amino acid sequence having at least 85% identity, or at least 90% identity, or at least 95% identity, or at least 96% identity, or at least 97% identity, or at least 98% identity, or at least 99% identity, to the amino acid sequence as set out in SEQ ID NO: 3. In an aspect of said flour the second glucose oxidase is an *Aspergillus* glucose oxidase comprising an amino acid sequence as set out in SEQ ID NO: 3.

In an aspect of the flour comprising a combination of glucose oxidases, at least one of the glucose oxidases is *Penicillium* glucose oxidase comprising an amino acid sequence as set out in amino acids 19 to 604 of SEQ ID NO. 1 and a second glucose oxidase, wherein the second glucose oxidase is an *Aspergillus* glucose oxidase comprising an amino acid sequence having at least 95% identity, at least 96% identity, at least 97% identity, at least 98 % identity or at least 99% identity to the amino acid sequence as set out in SEQ ID NO: 3.

In an aspect the pre-mix comprising a combination of glucose oxidases comprises a *Penicillium* glucose oxidase.

In an aspect of the pre-mix comprising a combination of glucose oxidases, at least one of the glucose oxidases is *Penicillium* glucose oxidase comprising an amino acid sequence having at least 75% identity to amino acids 19 to 604 of SEQ ID NO. 1 and a second glucose oxidase, and a second glucose oxidase is an *Aspergillus* glucose oxidase comprising an amino acid sequence having at least 85% identity, or at least 90% identity, or at least 95% identity, or at least 96% identity, or at least 97% identity, or at least 98% identity, or at least 99% identity, to the amino acid sequence as set out in SEQ ID NO: 3. In an aspect of said pre-mix the second glucose oxidase is an *Aspergillus* glucose oxidase comprising an amino acid sequence as set out in SEQ ID NO: 3.

In an aspect of the pre-mix comprising a combination of glucose oxidases, at least one of the glucose oxidases is *Penicillium* glucose oxidase comprising an amino acid sequence as set out in amino acids 19 to 604 of SEQ ID NO. 1 and a second glucose oxidase, wherein the second glucose oxidase is an *Aspergillus* glucose oxidase comprising an amino acid sequence having at least 95% identity, at least 96% identity, at least 97% identity, at least 98 % identity or at least 99% identity to the amino acid sequence as set out in SEQ ID NO: 3.

In another embodiment, the flour comprises by weight of flour: a) 1 to 50 ppm of a *Penicillium* glucose oxidase and b) 1 to 200 ppm, 1 to 175 ppm, 1 to 150 ppm, 1 to 125 ppm, 1 to 100 ppm, 1 to 90 ppm, 1 to 80 ppm, 1 to 70 ppm, 1 to 60 ppm, 1 to 50 ppm, 1 to 50 ppm, 1 to 30 ppm, 1 to 20 ppm or 10 to 20 ppm of an *Aspergillus* glucose oxidase.

In another embodiment, the flour comprises by weight of flour: a) 1 to 50 ppm of a *Penicillium* glucose oxidase comprising an amino acid sequence as set out in amino acids 19 to 604 of SEQ ID NO. 1 and b) 1 to 200 ppm, 1 to 175 ppm, 1 to 150 ppm, 1 to 125 ppm, 1 to 100 ppm, 1 to 90 ppm, 1 to 80 ppm, 1 to 70 ppm, 1 to 60 ppm, 1 to 50 ppm, 1 to 50 ppm, 1 to 30 ppm, 1 to 20 ppm or 10 to 20 ppm of a second glucose oxidase, wherein the second glucose oxidase is an *Aspergillus* glucose oxidase comprising an amino acid sequence having at least 95% identity to the amino acid sequence as set out in SEQ ID NO: 3.

In another embodiment, the flour comprises by weight of flour: a) 1 to 50 ppm of a *Penicillium* glucose oxidase comprising an amino acid sequence as set out in amino acids 19 to 604 of SEQ ID NO. 1 and b) 1 to 200 ppm, 1 to 175 ppm, 1 to 150 ppm, 1 to 125 ppm, 1 to 100 ppm, 1 to 90 ppm, 1 to 80 ppm, 1 to 70 ppm, 1 to 60 ppm, 1 to 50 ppm, 1 to 50 ppm, 1 to 30 ppm, 1 to 20 ppm or 10 to 20 ppm of a second glucose oxidase, wherein the second glucose oxidase is an *Aspergillus* glucose oxidase comprising an amino acid sequence having at least 96% identity to the amino acid sequence as set out in SEQ ID NO: 3.

In another embodiment, the flour comprises by weight of flour: a) 1 to 50 ppm of a *Penicillium* glucose oxidase comprising an amino acid sequence as set out in amino acids 19 to 604 of SEQ ID NO. 1 and b) 1 to 200 ppm, 1 to 175 ppm, 1 to 150 ppm, 1 to 125 ppm, 1 to 100 ppm, 1 to 90 ppm, 1 to 80 ppm, 1 to 70 ppm, 1 to 60 ppm, 1 to 50 ppm, 1 to 50 ppm, 1 to 30 ppm, 1 to 20 ppm or 10 to 20 ppm of a second glucose oxidase, wherein the second glucose oxidase is an *Aspergillus* glucose oxidase comprising an amino acid sequence having at least 97% identity to the amino acid sequence as set out in SEQ ID NO: 3.

In another embodiment, the flour comprises by weight of flour: a) 1 to 50 ppm of a *Penicillium* glucose oxidase comprising an amino acid sequence as set out in amino acids 19 to 604 of SEQ ID NO. 1 and b) 1 to 200 ppm, 1 to 175 ppm, 1 to 150 ppm, 1 to 125 ppm, 1 to 100 ppm, 1 to 90 ppm, 1 to 80 ppm, 1 to 70 ppm, 1 to 60 ppm, 1 to 50 ppm, 1 to 50 ppm, 1 to 30 ppm, 1 to 20 ppm or 10 to 20 ppm of a second glucose oxidase, wherein the second glucose oxidase is an *Aspergillus* glucose oxidase comprising an amino acid sequence having at least 98% identity to the amino acid sequence as set out in SEQ ID NO: 3.

In another embodiment, the flour comprises by weight of flour: a) 1 to 50 ppm of a *Penicillium* glucose oxidase comprising an amino acid sequence as set out in amino acids 19 to 604 of SEQ ID NO. 1 and b) 1 to 200 ppm, 1 to 175 ppm, 1 to 150 ppm, 1 to 125 ppm, 1 to 100 ppm, 1 to 90 ppm, 1 to 80 ppm, 1 to 70 ppm, 1 to 60 ppm, 1 to 50 ppm, 1 to 50 ppm, 1 to 30 ppm, 1 to 20 ppm or 10 to 20 ppm of a second glucose oxidase, wherein the second glucose oxidase is an *Aspergillus* glucose oxidase comprising an amino acid sequence having at least 99% identity to the amino acid sequence as set out in SEQ ID NO: 3.

In another embodiment, the flour comprises by weight of flour: a) 1 to 50 ppm of a *Penicillium* glucose oxidase comprising an amino acid sequence as set out in amino acids 19 to 604 of SEQ ID NO. 1 and b) 1 to 200 ppm, 1 to 175 ppm, 1 to 150 ppm, 1 to 125 ppm, 1 to 100 ppm, 1 to 90 ppm, 1 to 80 ppm, 1 to 70 ppm, 1 to 60 ppm, 1 to 50 ppm, 1 to 50 ppm, 1 to 30 ppm, 1 to 20 ppm or 10 to 20 ppm of a second glucose oxidase, wherein the second glucose oxidase is an *Aspergillus* glucose oxidase comprising an amino acid sequence as set out in SEQ ID NO: 3.

The *Penicillium* glucose oxidase typically has an activity in the range of about 2500 to 4000 glucose oxidase units/gram enzyme when determined according to the assay described below. In one embodiment, the *Penicillium* glucose oxidase has an activity in the range of about 2800 to 4000 glucose oxidase units/gram enzyme. In another embodiment, the *Penicillium* glucose oxidase has an activity in the range of about 3000 to 4000 glucose oxidase units/gram enzyme. In yet another embodiment, the *Penicillium* glucose oxidase has an activity in the range of about 3000 to 3600 glucose oxidase units/gram enzyme. In yet another embodiment, the *Penicillium* glucose oxidase has an activity of about 3300 glucose oxidase units/gram enzyme. Glucose oxidase activity is determined in an assay in which gluconic acid formed is titrated. 1 ml of diluted glucose oxidase is added to 25 ml of preheated 30 g/l glucose monohydrate solution at 35 degrees C. Sample dilutions and substrate are prepared in 50 mM HAc buffer at pH 5.1, containing 50 mM NaCl. After 15 minutes incubation at 35 degrees C, the reaction is terminated by the addition of 10 ml 0.1 N NaOH, at the same time neutralizing the gluconic acid formed. Excess NaOH is titrated with 0.05 M HCl. The difference in HCl consumption between a sample and blank run is a measure for the amount of glucose oxidase activity. One glucose oxidase unit is defined as the amount of enzyme needed to oxidize 3 mg of glucose to gluconic acid under conditions of the assay.

Glucose oxidase activities may be determined using alternative assays, such as spectrophotometrically at 450 nm using o-dianisidine as described by Witteveen et al. 1990 ("Glucose oxidase overproducing and negative mutants of Aspergillus niger", Appl. Microbiol. Biotechnol 33:683-686) or a glucose oxidase assay as described in the Food Chemicals Codex (FCC).

The term "pre-mix" is defined herein to be understood in its conventional meaning, i.e. as a mix of baking agents, generally including flour, which may be used not only in industrial bread-baking plants/facilities, but also in retail bakeries. The pre-mix may be prepared by mixing the glucose oxidase or a composition according to the disclosure with a suitable carrier such as flour, starch or a salt. The pre-mix may contain additives as mentioned herein.

In another aspect, the present disclosure relates to a method for improving flour or a pre-mix, wherein the method comprises adding to the flour or pre-mix a composition comprising a combination of glucose oxidases, such as a *Penicillium* glucose oxidase and a second glucose oxidase, for improving the volume or crumb structure of a baked product. Improvements are always relative to flour or pre-mix to which no glucose oxidases are added. The *Penicillium* glucose may be a *Penicillium* glucose oxidase with an amino acid sequence which shows at least 75%, at least 80%, at least 85%, at least 90%, at least 95%, at least 97%, at least 98% or at least 99% identity to amino acids 19-604 of SEQ ID NO. 1. The second glucose oxidase may suitably be a fungal, such as a filamentous fungal, or *Aspergillus* glucose oxidase.

In one embodiment, the method according to claim 2 comprises adding to the flour by weight of flour (i) 1 to 50 ppm of a *Penicillium* glucose oxidase and (ii) 1 to 200 ppm, 1 to 175 ppm, 1 to 150 ppm, 1 to 125 ppm, 1 to 100 ppm, 1 to 90 ppm, 1 to 80 ppm, 1 to 70 ppm, 1 to 60 ppm, 1 to 50 ppm, 1 to 50 ppm, 1 to 30 ppm, 1 to 20 ppm or 10 to 20 ppm of an *Aspergillus* glucose oxidase.

In one embodiment, 1 ppm - 50 ppm by weight of flour of a *Penicillium* glucose oxidase having an activity in a range of about 2500-4000, of about 2800-4000, of about 3000-4000 or of about 3000-3600 glucose oxidase units/gram enzyme in combination with 1 to 200 ppm of a second *Aspergillus* glucose oxidase, is used to improve the flour. In another embodiment, 1 ppm - 20 ppm by weight of flour of a *Penicillium* glucose oxidase having an activity in a range of about 2500-4000, of about 2800-4000, of about 3000-4000 or of about 3000-3600 glucose oxidase units/gram enzyme in combination with 1 to 20 ppm of a second *Aspergillus* glucose oxidase is used to improve the flour. The second glucose oxidase may be added simultaneously, sequentially, before or after the *Penicillium* glucose oxidase.

A flour or pre-mix according to the disclosure may be used to produce a dough according to the invention according to claim 3. Therefore, in yet another aspect, the present invention relates to a dough prepared from a pre-mix or flour according to claim 3 comprising a combination of glucose oxidases, namely a *Penicillium* glucose oxidase having an amino acid sequence which shows at least 75%, at least 80%, at least 85%, at least 90%, at least 95%, at least 97%, at least 98% or at least 99% identity to amino acids 19-604 of SEQ ID No. 1 and a second glucose oxidase as specified in claim 3. In one embodiment, a dough according to claim 3 is prepared from a flour comprising a) 1 to 50 ppm of a *Penicillium* glucose oxidase and b) 1 to 200 ppm of a second glucose oxidase. A dough according to claim 3 comprising a *Penicillium* glucose oxidase with an amino acid sequence which shows at least 75%, at least 80%, at least 85%, at least 90%, at least 95%, at least 97%, at least 98% or at least 99% identity to amino acids 19-604 of SEQ ID No. 1, and a second glucose oxidase is also encompassed by the present invention.

In the context of the present invention, the term 'dough' is defined as a mixture of flour and other ingredients according to claim 3. In one embodiment, the dough is firm enough to knead or roll. The dough may be fresh prepared or par-baked. Dough is made according to claim 2. The at least one dough ingredient may be selected from the group consisting of (cereal) flour, a lecithin source including egg, water, salt, sugar, flavours, a fat source including butter, margarine, oil and shortening, baker's yeast, chemical leavening systems such as a combination of an acid (generating compound) and bicarbonate, a protein source including milk, soy flour, non-chemical oxidants (including ascorbic acid), a reducing agent (including L-cysteine), an emulsifier (including mono- and di glycerides, monoglycerides such as glycerol monostearate (GMS), sodium stearoyl lactylate (SSL), calcium stearoyl lactylate (CSL), polyglycerol esters of fatty acids (PGE) and diacetyl tartaric acid esters of mono- and diglycerides (DATEM), propylene glycerol monostearate and lecithin), a gum (including guar gum and xanthan gum), a flavour, an acids (including citric acid, propionic acid), a starch, a modified starch, gluten, a humectant (including glycerol) and a preservative.

Dough is made using dough ingredients, which include without limitation (cereal) flour, a lecithin source including egg, water, salt, sugar, flavours, a fat source including butter, margarine, oil and shortening, baker's yeast, chemical leavening systems such as a combination of an acid (generating compound) and bicarbonate, a protein source including milk, soy flour, non-chemical oxidants (including ascorbic acid, bromate and azodicarbonamide (ADA), reducing agents (including L-cysteine), emulsifiers (including mono/di glycerides, monoglycerides such as glycerol monostearate (GMS), sodium stearoyl lactylate (SSL), calcium stearoyl lactylate (CSL), polyglycerol esters of fatty acids (PGE) and diacetyl tartaric acid esters of mono- and diglycerides (DATEM), gums (including guar gum and xanthan gum), flavours, acids (including citric acid, propionic acid), starch, modified starch, gluten, humectants (including glycerol) and preservatives.

Dough is usually made from basic dough ingredients including (cereal) flour, such as wheat flour or rice flour, water and optionally salt. Cereals include maize, rice, wheat, barley, sorghum, millet, oats, rye, triticale, buckwheat, quinoa, spelt, einkorn, emmer, durum and kamut.

For leavened products, primarily baker's yeast is used next to chemical leavening systems such as a combination of an acid or acid generating compound and bicarbonate.

In the context of the present invention, the term dough includes a batter. A batter is a semi-liquid mixture, being thin enough to drop or pour from a spoon, of one or more flours combined with liquids such as water, milk or eggs used to prepare various foods, including cake. The dough may be made using a mix including a cake mix, a biscuit mix, a brownie mix, a bread mix, a pancake mix and a crepe mix.

In one embodiment, a composition according to the disclosure is added to a dough. The composition according to the disclosure may be provided in a dry form, to allow easy addition to the dough, but liquid forms are also possible. A liquid form includes without limitation an emulsion, a suspension and a solution. Irrespective of the formulation of the enzyme composition, any additive or additives known to be useful in the art to improve and/or maintain the enzyme's activity, the quality of the dough and/or the baked product may be applied.

Yeast, enzymes and optionally additives are generally added separately from each other to the dough. Enzymes may be added in a dry, e.g. granulated form, in a liquid form or in the form of a paste. Additives are in most cases added in powder form. Suitable additives include chemical or non-chemical oxidants, including ascorbic acid, bromate and azodicarbonamide (ADA); reducing agents, including L-cysteine; emulsifiers, including lecithin and mono and diglycerides, such as glycerol monostearate (GMS), sodium stearoyl lactylate (SSL), calcium stearoyl lactylate (CSL), polyglycerol esters of fatty acids (PGE) and diacetyl tartaric acid esters of mono- and diglycerides (DATEM); gums, including guar gum and xanthan gum; flavours, acids, including citric acid and propionic acid; starch, including modified starch; gluten; humectants, including glycerol; and preservatives. A suitable additive includes propylene glycerol monostearate (PGMS).

The preparation of a dough from the dough ingredients is well known in the art and includes mixing of said ingredients and optionally one or more moulding and fermentation steps. In another aspect, the present disclosure relates to a method for improving a dough. The method comprises combining a pre-mix or flour comprising a *Penicillium* glucose oxidase and a second glucose oxidase with at least one dough ingredient and is also encompassed by the presentdisclosure.

The preparation of baked products from such doughs is also well known in the art and may comprise moulding and shaping and further fermentation of the dough followed by baking at required temperatures and baking times. In one embodiment the invention provides a method according to claim 5 to prepare a baked product comprising the step of baking a dough according to claims 3 or 4 comprising a *Penicillium* glucose oxidase and a second *Aspergillus* glucose oxidase. The baking of the dough to produce a baked product may be performed using methods well known in the art. The disclosure also provides a baked product obtainable according to this method. In one embodiment of the disclosure, the baked product according to the disclosure is bread or cake.

Examples of baked products, whether of a white, brown or whole-meal type, which may be advantageously produced by the present invention include bread (in particular white, whole-meal or rye bread), typically in the form of loaves or rolls, French baguette-type bread, pastries, croissants, brioche, panettone, pasta, noodles (boiled or (stir-)fried), pita bread and other flat breads, tortillas, tacos, cakes, pancakes, cookies in particular biscuits, doughnuts, including yeasted doughnuts, bagels, pie crusts, steamed bread, crisp bread, brownies, sheet cakes, snack foods (e.g., pretzels, tortilla chips, fabricated snacks, fabricated potato crisps). The term baked product includes, bread containing from 2 to 30 wt% sugar, fruit containing bread, breakfast cereals, cereal bars, eggless cake, soft rolls and gluten-free bread. Gluten free bread herein and herein after is bread than contains at most 20 ppm gluten. Several grains and starch sources are considered acceptable for a gluten-free diet. Frequently used sources are potatoes, rice and tapioca (derived from cassava). Baked product includes without limitation tin bread, loaves of bread, twists, buns, such as hamburger buns or steamed buns, chapati, rusk, dried steam bun slice , bread crumb, matzos, focaccia, melba toast, zwieback, croutons, soft pretzels, soft and hard bread, bread sticks, yeast leavened and chemically-leavened bread, laminated dough products such as Danish pastry, croissants or puff pastry products, muffins, Danish bagels, confectionery coatings, crackers, wafers, pizza crusts, tortillas, pasta products, crepes, waffles and par-baked products. An example of a par-baked product includes, without limitation, partially baked bread that is completed at point of sale or consumption with a short second baking process.

The bread may be white or brown pan bread and may for example be manufactured using a so called American style Sponge and Dough method or an American style Direct method.

The term tortilla herein includes corn tortilla and wheat tortilla. A corn tortilla is a type of thin, flat bread, usually unleavened made from finely ground maize (usually called "corn" in the United States). A flour tortilla is a type of thin, flat bread, usually unleavened, made from finely ground wheat flour. The term tortilla further includes a similar bread from South America called arepa, though arepas are typically much thicker than tortillas. The term tortilla further includes a laobing, a pizza-shaped thick "pancake" from China and an Indian Roti, which is made essentially from wheat flour. A tortilla usually has a round or oval shape and may vary in diameter from about 6 to over 30 cm.

Baked products obtained by using a dough prepared according to the invention are disclosed. All the embodiments which were mentioned above for the flour, with all the preferences mentioned above, also apply to doughs and baked products.

In yet another aspect, compositions according to the disclosure may be used as improving agents, also referred to as bread improvers or dough improvers, which are combined with flour to improve functionalities of the bread, dough or of the baked product made from the dough. The improvement is in comparison to a dough which does not contain a bread or dough improver according to the disclosure and may be reflected in any functionality of the bread, dough or baked product from the dough, such as increased strength of the dough, increased viscoelasticity of the dough, increased stability of the dough, reduced stickiness of the dough, improved extensibility of the dough, improved machinability of the dough, increased volume of the baked product, improved flavour of the baked product, improved crumb structure of the baked product, improved crumb softness of the baked product, reduced blistering of the baked product, improved crispiness, improved resilience both initial and in particular after storage, reduced hardness after storage or improved anti-staling properties of the baked product.

The term "increased strength of the dough" is defined herein as the property of a dough that has generally more viscoelastic properties and/or requires more work input to mould and shape.

The term "increased viscoelasticity of the dough" is defined herein as the property of a dough which has a higher tendency to regain its original shape after being subjected to a certain physical strain.

The term "increased stability of the dough" is defined herein as the property of a dough that is less susceptible to forming faults as a consequence of mechanical abuse thus better maintaining its shape and volume and is evaluated by the ratio of height: width of a cross section of a loaf after normal and/or extended proof.

The term "reduced stickiness of the dough" is defined herein as the property of a dough that has less tendency to adhere to surfaces, e.g., in the dough production machinery, and is either evaluated empirically by the skilled test baker or measured by a suitable system known in the art, such as Warburtons dough stickiness system

The term "improved extensibility of the dough" is defined herein as the property of a dough that can be subjected to increased strain or stretching without rupture.

The term "improved machinability of the dough" is defined herein as the property of a dough that is generally less sticky and/or more firm and/or more elastic. Consequently there is less fouling of plant equipment and a reduced need for cleaning.

The term "improved crumb structure of the baked product" is defined herein as the property of a baked product with finer cells and/or thinner cell walls in the crumb and/or more uniform/homogenous distribution of cells in the crumb and is usually evaluated visually by the baker or by digital image analysis as known in the art (eg. C-cell, Calibre Control International Ltd, Appleton, Warrington, UK).

The term "improved softness of the baked product" is the opposite of "hardness" and is defined herein as the property of a baked product that is more easily compressed and is evaluated either empirically by the skilled test baker or measured by the use of a texture analyzer known in the art.

The term "reduced blistering of the baked product" is defined herein as a visually determined reduction of blistering on the crust of the baked bread.

The term "improved crispiness" is defined herein as the property of a baked product to give a crispier sensation than a reference product as known in the art, as well as to maintain this crispier perception for a longer time than a reference product. This property can be quantified by measuring a force versus distance curve at a fixed speed in a compression experiment using e.g. a texture analyzer TA-XT Plus (Stable Micro Systems Ltd, Surrey, UK), and obtaining physical parameters from this compression curve, viz. (i) force of the first peak, (ii) distance of the first peak, (iii) the initial slope, (iv) the force of the highest peak, (v) the area under the graph and (vi) the amount of fracture events (force drops larger than a certain preset value). Indications of improved crispness are a higher force of the first peak, a shorter distance of the first peak, a higher initial slope, a higher force of the highest peak, higher area under the graph and a larger number of fracture events. A crispier product should score statistically significantly better on at least two of these parameters as compared to a reference product. In the art, "crispiness" is also referred to as crispness, crunchiness or crustiness, meaning a material with a crispy, crunchy or crusty fracture behaviour.

The term "improved anti-staling properties of the baked product" is defined herein as the properties of a baked product that have a reduced rate of deterioration of quality parameters, e.g. reduced hardness after storage and/or decreased loss of resilience after storage. Anti-staling properties may be demonstrated by a reduced hardness after storage of the baked product. The enzyme composition according to the disclosure or the pre-mix according to the disclosure may result in reduced hardness, e.g. in a baked product that is more easily compressed. The hardness of the baked product may be evaluated either empirically by the skilled test baker or measured by the use of a texture analyzer known in the art. The hardness measured within 24 hours after baking is called initial hardness. The hardness measured 24 hours or more after baking is called hardness after storage, and is also a measure for determining shelf life. In case the initial hardness has reduced, it has improved. In case the hardness after storage has reduced, it has improved. Resilience of the baked product is preferably measured by the use of a texture analyzer known in the art. The resilience measured within 24 hours after baking is called initial resilience. The resilience measured 24 hours or more after baking is called resilience after storage, and is also a measure for determining shelf life. Freshly baked product typically gives crumb of high initial resilience but resilience is lost over shelf-life. Improved anti-staling properties may be demonstrated by a reduced loss of resilience over storage.

In an aspect of the disclosure, a use of the disclosure is a use of a composition comprising a combination of glucose oxidases for improving the stability of a dough, wherein the combination of glucose oxidases comprises a *Penicillium* glucose oxidase having an amino acid sequence having at least 75% identity to amino acids 19 to 604 of SEQ ID NO. 1 and a second glucose oxidase obtainable from an *Aspergillus.*

In an aspect of the disclosure, a use of the disclosure is a use of a composition comprising a combination of glucose oxidases for improving the volume of a baked product, wherein the combination of glucose oxidases comprises a *Penicillium* glucose oxidase having an amino acid sequence having at least 75% identity to amino acids 19 to 604 of SEQ ID NO. 1 and a second glucose oxidase obtainable from an *Aspergillus.*

In an aspect of the disclosure, a use of the disclosure is a use of a composition comprising a combination of glucose oxidases for improving the crumb structure of a baked product, , wherein the combination of glucose oxidases comprises a *Penicillium* glucose oxidase having an amino acid sequence having at least 75% identity to amino acids 19 to 604 of SEQ ID NO. 1 and a second glucose oxidase obtainable from an *Aspergillus.*

In an aspect of the disclosure, a use of the disclosure is a use of a composition comprising a combination of glucose oxidases for improving the stability of a dough and/or the volume of a baked product and/or the crumb structure of a baked product, wherein the combination of glucose oxidases comprises a *Penicillium* glucose oxidase having an amino acid sequence having at least 75% identity to amino acids 19 to 604 of SEQ ID NO. 1 and a second glucose oxidase obtainable from an *Aspergillus.*

In an aspect of the invention according to claim 1, a use of the invention is a use of a composition comprising a combination of glucose oxidases for improving shock resistance of a dough and/or the crumb structure of a baked product, wherein the the compositions comprises a *Penicillium* glucose oxidase having an amino acid sequence having at least 75% identity to amino acids 19 to 604 of SEQ ID NO. 1 and an *Aspergillus* glucose oxidase comprising an amino acid sequence having at least 85% identity, or at least 90% identity, or at least 95% identity, or at least 96% identity, or at least 97% identity, or at least 98% identity, or at least 99% identity, to the amino acid sequence as set out in SEQ ID NO: 3. In an aspect the second glucose oxidase is an *Aspergillus* glucose oxidase comprising an amino acid sequence as set out in SEQ ID NO: 3,
wherein shock resistance is determined as set forth in the description and
wherein an improved crumb structure includes a finer crumb structure as compared to a reference and it determined as set forth in the description.

In an aspect the invention relates to a dough according to claim 3 comprising a *Penicillium* glucose oxidase having an amino acid sequence having at least 75% identity to amino acids 19 to 604 of SEQ ID NO. 1 and a second glucose oxidase, wherein the second glucose oxidase is an *Aspergillus* glucose oxidase comprising an amino acid sequence having at least 85% identity, or at least 90% identity, or at least 95% identity, or at least 96% identity, or at least 97% identity, or at least 98% identity, or at least 99% identity, to the amino acid sequence as set out in SEQ ID NO: 3 and baker's yeast and/or a chemical leavening system. In an aspect the dough according to claim 3 comprises as the second glucose oxidase an *Aspergillus* glucose oxidase comprising an amino acid sequence as set out in SEQ ID NO: 3.

The invention further relates to dough according to claim 3 comprising a *Penicillium* glucose oxidase having an amino acid sequence as set out in amino acids 19 to 604 of SEQ ID NO. 1 and a second glucose oxidase, wherein the second glucose oxidase is an *Aspergillus* glucose oxidase comprising an amino acid sequence having at least 85% identity to the amino acid sequence as set out in SEQ ID NO: 3.

The invention further relates to dough according to claim 3 comprising a *Penicillium* glucose oxidase having an amino acid sequence as set out in amino acids 19 to 604 of SEQ ID NO. 1 and a second glucose oxidase, wherein the second glucose oxidase is an *Aspergillus* glucose oxidase comprising an amino acid sequence having at least 90% identity to the amino acid sequence as set out in SEQ ID NO: 3.

The invention further relates to dough according to claim 3 comprising a *Penicillium* glucose oxidase having an amino acid sequence as set out in amino acids 19 to 604 of SEQ ID NO. 1 and a second glucose oxidase, wherein the second glucose oxidase is an *Aspergillus* glucose oxidase comprising an amino acid sequence having at least 95% identity to the amino acid sequence as set out in SEQ ID NO: 3.

In an aspect the dough according to the invention comprises by weight of flour

a) 1 to 50 ppm of the *Penicillium* glucose oxidase; and
b) 1 to 200 ppm of the second glucose oxidase.

In an aspect the dough according to the invention as set forth in claim 4 comprises by weight of flour

a) 1 to 50 ppm of the *Penicillium* glucose oxidase; and
b) 1 to 200 ppm of the second glucose oxidase, wherein the *Penicillium* glucose oxidase has an amino acid sequence as set out in amino acids 19 to 604 of SEQ ID NO. 1 and wherein the second glucose oxidase is an *Aspergillus* glucose oxidase comprising an amino acid sequence having at least 95% identity to the amino acid sequence as set out in SEQ ID NO: 3.

The disclosure also relates to a method for increasing dough stability comprising the step of combining a *Penicillium* glucose oxidase and a second glucose oxidase with at least one dough ingredient, wherein the second glucose oxidase is an *Aspergillus* glucose oxidase comprising an amino acid sequence having at least 85% identity, or at least 90% identity, or at least 95% identity, or at least 96% identity, or at least 97% identity, or at least 98% identity, or at least 99% identity, to the amino acid sequence as set out in SEQ ID NO: 3.

In an aspect of the method according to the disclosure for increasing dough stability the second glucose oxidase is an *Aspergillus* glucose oxidase comprising an amino acid sequence as set out in the amino acid sequence SEQ ID NO: 3.

In an aspect of the method according to the disclosure for increasing dough stability the *Penicillium* glucose oxidase comprises an amino acid sequence having at least 75% identity to amino acids 19 to 604 of SEQ ID NO. 1.

In an aspect of the method according to the disclosure for increasing dough stability the *Penicillium* glucose oxidase comprises an amino acid sequence as set out in amino acids 19 to 604 of SEQ ID NO. 1.

In an aspect of the method according to the disclosure for increasing dough stability the *Penicillium* glucose oxidase comprises an amino acid sequence as set out in amino acids 19 to 604 of SEQ ID NO. 1 and a second glucose oxidase, wherein the second glucose oxidase is an *Aspergillus* glucose oxidase comprising an amino acid sequence having at least 85% identity to the amino acid sequence as set out in SEQ ID NO: 3.

In an aspect of the method according to the disclosure for increasing dough stability the *Penicillium* glucose oxidase comprises an amino acid sequence as set out in amino acids 19 to 604 of SEQ ID NO. 1 and a second glucose oxidase, wherein the second glucose oxidase is an *Aspergillus* glucose oxidase comprising an amino acid sequence having at least 90% identity to the amino acid sequence as set out in SEQ ID NO: 3.

In an aspect of the method according to the disclosure for increasing dough stability the *Penicillium* glucose oxidase comprises an amino acid sequence as set out in amino acids 19 to 604 of SEQ ID NO. 1 and a second glucose oxidase, wherein the second glucose oxidase is an *Aspergillus* glucose oxidase comprising an amino acid sequence having at least 95% identity to the amino acid sequence as set out in SEQ ID NO: 3.

In an aspect the method for increasing dough stability comprises the step of combining at least one dough ingredient, a *Penicillium* glucose oxidase comprising an amino acid sequence as set out in amino acids 19 to 604 of SEQ ID NO. 1 and a second glucose oxidase, preferably wherein the second glucose oxidase is an *Aspergillus* glucose oxidase comprising an amino acid sequence having at least 85% identity to the amino acid sequence as set out in SEQ ID NO: 3.

In an aspect the method for increasing dough stability comprises the step of combining at least one dough ingredient, a *Penicillium* glucose oxidase comprising an amino acid sequence as set out in amino acids 19 to 604 of SEQ ID NO. 1 and a second glucose oxidase, wherein the second glucose oxidase is an *Aspergillus* glucose oxidase comprising an amino acid sequence having at least 90% identity to the amino acid sequence as set out in SEQ ID NO: 3.

In an aspect the method for increasing dough stability comprises the step of combining at least one dough ingredient, a *Penicillium* glucose oxidase comprising an amino acid sequence as set out in amino acids 19 to 604 of SEQ ID NO. 1 and a second glucose oxidase, wherein the second glucose oxidase is an *Aspergillus* glucose oxidase comprising an amino acid sequence having at least 95% identity to the amino acid sequence as set out in SEQ ID NO: 3.

In an aspect the method for increasing dough stability comprises the step of combining at least one dough ingredient, a *Penicillium* glucose oxidase comprising an amino acid sequence as set out in amino acids 19 to 604 of SEQ ID NO. 1 and a second glucose oxidase, wherein the second glucose oxidase is an *Aspergillus* glucose oxidase comprising an amino acid sequence having at least 96 % identity to the amino acid sequence as set out in SEQ ID NO: 3.

In an aspect the method for increasing dough stability comprises the step of combining at least one dough ingredient, a *Penicillium* glucose oxidase comprising an amino acid sequence as set out in amino acids 19 to 604 of SEQ ID NO. 1 and a second glucose oxidase, wherein the second glucose oxidase is an *Aspergillus* glucose oxidase comprising an amino acid sequence having at least 97% identity to the amino acid sequence as set out in SEQ ID NO: 3.

In an aspect of the method according to the disclosure for increasing dough stability the *Penicillium* glucose oxidase is used in an amount of from 1 ppm up to and including 50 ppm based on weight of flour and wherein the *Penicillium* glucose oxidase has an activity in the range of 2500-4000 glucose oxidase units/gram enzyme.

## EXAMPLES

### Materials and methods

### Flour corrector

The flour corrector used was a composition comprising 30 ppm ascorbic acid (from DSM Nutritional Products, Switzerland), 2 ppm Bakezyme® P500 (fungal alpha-amylase from DSM, The Netherlands), 15 ppm Bakezyme® HSP6000 (fungal hemicellulase from DSM, The Netherlands) and Kolibri flour (Meneba, the Netherlands) as filling material.

### Glucose oxidases

*Penicillium* glucose oxidase was *Penicillium chrysogenum* glucose oxidase with a protein sequence as depicted in SEQ ID No.1 prepared by transformation of an *Aspergillus* with a construct comprising a cDNA sequence as depicted in SEQ ID No. 2. The *Penicillium* glucose oxidase used was *Penicillium chrysogenum* glucose oxidase with a protein sequence as depicted in SEQ ID No.1 prepared by transformation of an *Aspergillus* with a construct comprising a cDNA sequence as depicted in SEQ ID No. 2 and subsequent expression of the enzyme.

BakeZyme® GO10.000 BG, (*Aspergillus* glucose oxidase, from DSM Food Specialties, the Netherland.

### Determination of glucose oxidase activity

Glucose oxidase activity was determined in an assay in which gluconic acid formed is titrated. Thereto, 1 ml of diluted glucose oxidase was added to 25 ml of preheated 30 g/l glucose monohydrate solution at 35 degrees C. Sample dilutions and substrate were prepared in 50 mM HAc buffer at pH 5.1, containing 50 mM NaCl. After 15 minutes incubation at 35 degrees C, the reaction was terminated by the addition of 10 ml 0.1 N NaOH, at the same time neutralizing the gluconic acid formed. Excess NaOH was titrated with 0.05 M HCI. The difference in HCI consumption between a sample and blank run is a measure for the amount of glucose oxidase activity. One glucose oxidase unit is defined as the amount of enzyme needed to oxidize 3 mg of glucose to gluconic acid under conditions of the assay.

Activity of *Penicillium* glucose oxidase used was 3300 glucose oxidase units/gram enzyme. ppm means mg/kg, e.g. 20 ppm means 20 mg of the indicated product per kg flour.

**Stressful shock test**

The stressful shock test is performed to simulate the stress that a proofed dough can be submitted in a bakery facility, like transportation in hacks or conveyor belts. The test consists in putting a pan with a proofed dough piece over two supports that are pulled apart letting the pan drop from 70 mm on a table. This step is done twice. A proofed dough with lack of strength will collapse and thus show a decrease in volume.

**Wheat bread flour - USA**

Wheat bread flour USA is flour from spring and winter wheat to produce a quality patent flour. The wheat bread flour used was Honeyville's Golden Loaf Bread Flour from Inter-County Bakers, Inc. Lindenhurst, New York.

**Example 1 Baking performance of a combination of two fungal glucose oxidases**

The baking performance of a combination of *Penicillium* glucose oxidase with another glucose oxidase was tested in floor baked bread. The other glucose oxidase *was Aspergillus* glucose oxidase as present in Bakezyme GO10.000 BG (DSM, the Netherlands).

A bread dough was prepared by mixing the ingredients listed in Table 1 together with the glucose oxidase or a glucose oxidase combination according to Table 2 first column in a Diosna SP-12 mixer, 400 turns, at a frequency of 25 Hz and thereafter 72Wh at a frequency of 50 Hz, to a final dough temperature of 28°C.

**Table 1 Basic bread recipe**

| Ingredient | grams | % based on flour weight | Type |
|---|---|---|---|
| Flour | 1600 | | Kolibri, Meneba, the Netherlands |
| Flour | 400 | | Ibis, Meneba, the Netherlands |
| Salt | 36 | 1.8 | Suprasel, Akzo Nobel, the Netherlands |
| Fresh yeast | 50 | 2.5 | Koningsgist, AB Mauri, the Netherlands |
| Flour corrector | 10 | 0.5 | See materials & methods |
| Water | 1240 | 62 | +/- 1% |

The dough was divided in 6 pieces of 350 g, rounded and proofed in the bench proof cabinet for 20 minutes at 28°C and 90% relative humidity. Then, the dough pieces were moulded using a Bertrand baguette moulder and placed on greased baking trays after that, the dough pieces were proofed in a Wachtel Octopus proof cabinet for 75 minutes at 32°C with a relative humidity of 88%. The fully proofed dough pieces were cut twice, diagonally on top of the dough piece, using a razor blade knife and placed in a Wachtel Comet rotation oven set at 245°C top heat and 235°C floor heat with initial steam addition and baked for 5 minutes. After that, the temperature was decreased to 225°C top heat and 235°C floor heat for another 20 minutes

After baking, the oven was unloaded, the breads were taken off the baking trays and placed on a rack to cool for at least one hour at ambient temperature, which was typically between 20 and 25 °C. After 1-2 hours cooling, the breads were assessed on volume, shape, softness and structure.

After cooling down to room temperature, the volumes of the loaves were determined by an automated bread volume analyser (BVM-3, TexVol Instruments). The loaf volume of the control bread is defined as 100%. Results are shown in Table 2, which shows the average value of four loaves for each recipe. The control refers to a loaf of bread prepared from the ingredients in Table 1, i.e. to which no *Penicillium* glucose oxidase or *Aspergillus* glucose oxidase was added.

**Table 2 Average volume of four loaves**

| | Relative Volume (%) |
|---|---|
| Control | 100 |
| 20 ppm Bakezyme GO10.000 BG | 101 |
| 20 ppm *Penicillium* glucose oxidase | 103 |

(continued)

| | Relative Volume (%) |
|---|---|
| 8 ppm Bakezyme GO10.000 BG* and 12 ppm *Penicillium* glucose oxidase | 107 |
| * *Aspergillus tubingensis* glucose oxidase, from DSM Food Specialties, the Netherlands | |

These results show that the two glucose oxidase are working synergistically (volume increase 7%, instead of 4%), creating improved stability, translated in increased volume of the final bread.

The crumb structure was examined and it was clearly visible that bread containing *Penicillium* glucose oxidase showed a finer crumb structure than breads without this glucose oxidase. The crust opening was also improved.

The consistency, body, development, extensibility, elasticity and stickiness of the dough were evaluated by an experienced baker. Dough containing a combination of 8 ppm Bakezyme GO10.000 BG and 12 ppm *Penicillium* glucose oxidase was considered to have superior dough handling properties.

In conclusion, a dough containing a combination of *Penicillium* glucose oxidase with a second glucose oxidase displayed improved handling properties and resulted in a baked product with improved volume and crumb structure.

**Example 2 Baking experiments with and without shock**

In this experiment the baking performance of *Penicillium* glucose oxidase with another glucose oxidase was tested in American Style open top tin bread using a direct process. *Aspergillus* glucose oxidase as present in Bakezyme GO10.000 BG (DSM, the Netherlands) was used as the other glucose oxidase.

The ingredients listed in Table 3 were mixed in a Hobart A-120 mixer using a McDuffy bowl and hook agitator for two minutes at speed one, thereafter for six minutes at speed two, to optimum gluten development, to a final dough temperature of 25°C to 27°C. The fully mixed dough was allowed to rest, covered under plastic, for two minutes at room temperature.

**Table 3**

| ***Ingredients*** | amounts in grams |
|---|---|
| Wheat Bread Flour - USA | 1000 |
| Water | 660 |
| Yeast instant dry | 20 |
| Sugar | 40 |
| Shortening (soy bean oil) | 40 |
| Salt | 20 |
| All ingredients were supplied by Inter-County Bakers, Inc. Lindenhurst, New York. | |

The dough was divided in pieces of 450 g, rounded and allowed to rest for two minutes at room temperature. Afterwards the dough pieces were moulded using a Unic moulder (top 6.5 / bottom 6) and the moulded loaves were placed into bread pans and placed in a proofing cabinet at 38°C, at relative humidity of 85% for 85 minutes. Part of the fully proofed dough pieces were subjected to the stressful shock test as described in Materials & Methods. Then, dough pieces with and without shock test were placed in a BeCOM revolving oven and baked in 24 minutes at 205°C. Thereafter, the breads were taken out of the oven, de-panned and placed on a rack to cool for at least 1 hour at ambient temperature, which was typically between 20 and 25 °C. After 1-2 hours cooling, the breads were assessed on weight and volume.

After cooling down to room temperature the weights of the loaves were determined using a Mettler Toledo scale with a precision of 0.01gram. The volumes of the loaves were determined using a Loaf Volumeter (1 Pound Volumeter - National Cereal Chemistry Equipment). Results are shown in Table 4

**Table 4**

| | Relative Volume (%) non shock | Relative Volume (%) shock |
|---|---|---|
| Control | 100 | 100 |

(continued)

| | Relative Volume (%) non shock | Relative Volume (%) shock |
|---|---|---|
| 10 ppm Bakezyme GO10.000 BG* | 106 | 119 |
| 10 ppm *Penicillium* glucose oxidase | 102 | 117 |
| 5 ppm Bakezyme GO10.000 BG and 5 ppm *Penicillium* glucose oxidase | 105 | 121 |
| * *Aspergillus* glucose oxidase, from DSM Food Specialties, the Netherlands | | |

The non-shock test results show that the volume of the bread prepared using a combination of glucose oxidases (5 ppm each) showed a volume increase (5%).

The shock test results show that the combination of 5 ppm *Aspergillus* glucose oxidase and 5 ppm *Penicillium* glucose oxidase creates synergy in comparison to 10 ppm *Aspergillus* glucose oxidase or 10 ppm *Penicillium* glucose oxidase under stressful conditions such as in a shock test, creating improved stability, translated in increased volume of the final bread.

Crumb structure evaluation showed that bread containing *Penicillium* glucose oxidase resulted in bread with a finer crumb structure.

These results illustrate that a dough containing a combination of *Penicillium* glucose oxidase with another glucose oxidase results in a baked product with improved stability, translated in increased volume of the final bread and improved crumb structure.

**Example 3 Baking performance of a combination of two fungal glucose oxidases**

The baking performance of a combination of *Penicillium* glucose oxidase with another glucose oxidase was tested in floor baked bread. The other glucose oxidase *was Aspergillus* glucose oxidase as present in Bakezyme GO10.000 BG (DSM, the Netherlands).

A bread dough was prepared by mixing the ingredients listed in Table 5 together with the glucose oxidase or a glucose oxidase combination according to Table 6 first column in a Diosna SP-12 mixer, 400 turns, at a frequency of 25 Hz and thereafter 72Wh at a frequency of 50 Hz, to a final dough temperature of 28°C.

**Table 5 Basic bread recipe**

| Ingredient | grams | % based on flour weight | Type |
|---|---|---|---|
| Flour | 1600 | | Kolibri, Meneba, the Netherlands |
| Flour | 400 | | Ibis, Meneba, the Netherlands |
| Salt | 36 | 1.8 | Suprasel, Akzo Nobel, the Netherlands |
| Fresh yeast | 50 | 2.5 | Koningsgist, AB Mauri, the Netherlands |
| Flour corrector | 10 | 0.5 | See materials & methods |
| Water | 1240 | 62 | +/- 1% |

The dough was divided in 6 pieces of 350 g, rounded and proofed in the bench proof cabinet for 20 minutes at 28°C and 90% relative humidity. Then, the dough pieces were moulded using a Bertrand baguette moulder and placed on greased baking trays after that, the dough pieces were proofed in a Wachtel Octopus proof cabinet for 75 minutes at 32°C with a relative humidity of 88%. The fully proofed dough pieces were cut twice, diagonally on top of the dough piece, using a razor blade knife and placed in a Wachtel Comet rotation oven set at 245°C top heat and 235°C floor heat with initial steam addition and baked for 5 minutes. After that, the temperature was decreased to 225°C top heat and 235°C floor heat for another 20 minutes

After baking, the oven was unloaded, the breads were taken off the baking trays and placed on a rack to cool for at least one hour at ambient temperature, which was typically between 20 and 25 °C. After 1-2 hours cooling, the breads were assessed on volume, shape, softness and structure.

After cooling down to room temperature, the volumes of the loaves were determined by an automated bread volume analyser (BVM-3, TexVol Instruments). The loaf volume of the control bread is defined as 100%. Results are shown in Table 5, which shows the average value of four loaves for each recipe. The control refers to a loaf of bread prepared from the ingredients in Table 4, i.e. to which no *Penicillium* glucose oxidase or *Aspergillus* glucose oxidase was added.

**Table 6 Average volume of four loaves**

| | Relative Volume (%) |
|---|---|
| Control | 100 |
| 20 ppm Bakezyme GO10.000 BG | 101 |
| 20 ppm *Penicillium* glucose oxidase | 103 |
| 8 ppm Bakezyme GO10.000 BG* and 12 ppm *Penicillium* glucose oxidase | 107 |
| * BakeZyme® GO10.000 BG, (*Aspergillus* glucose oxidase as set out in SEQ ID No.3., from DSM Food Specialties, the Netherlands). | |

These results show that the two glucose oxidase are working synergistically (volume increase 7%, instead of 4%), creating improved stability, translated in increased volume of the final bread.

The crumb structure was examined and it was clearly visible that bread containing *Penicillium* glucose oxidase showed a finer crumb structure than breads without this glucose oxidase. The crust opening was also improved.

The consistency, body, development, extensibility, elasticity and stickiness of the dough were evaluated by an experienced baker. Dough containing a combination of 8 ppm Bakezyme GO10.000 BG and 12 ppm *Penicillium* glucose oxidase was considered to have superior dough handling properties.

In conclusion, a dough containing a combination of *Penicillium* glucose oxidase with a second glucose oxidase displayed improved handling properties and resulted in a baked product with improved volume and crumb structure.

**Example 4 Baking experiments with and without shock**

In this experiment the baking performance of *Penicillium* glucose oxidase with another glucose oxidase was tested in American Style open top tin bread using a direct process. *Aspergillus* glucose oxidase as present in Bakezyme GO10.000 BG (DSM, the Netherlands) was used as the other glucose oxidase.

The ingredients listed in Table 7 were mixed in a Hobart A-120 mixer using a McDuffy bowl and hook agitator for two minutes at speed one, thereafter for six minutes at speed two, to optimum gluten development, to a final dough temperature of 25°C to 27°C. The fully mixed dough was allowed to rest, covered under plastic, for two minutes at room temperature.

**Table 7**

| ***Ingredients*** | amounts in grams |
|---|---|
| Wheat Bread Flour - USA | 1000 |
| Water | 660 |
| Yeast instant dry | 20 |
| Sugar | 40 |
| Shortening (soy bean oil) | 40 |
| Salt | 20 |

All ingredients were supplied by Inter-County Bakers, Inc. Lindenhurst, New York.

The dough was divided in pieces of 450 g, rounded and allowed to rest for two minutes at room temperature. Afterwards the dough pieces were moulded using a Unic moulder (top 6.5 / bottom 6) and the moulded loaves were placed into bread pans and placed in a proofing cabinet at 38°C, at relative humidity of 85% for 85 minutes. Part of the fully proofed dough pieces were subjected to the stressful shock test as described in Materials & Methods. Then, dough pieces with and without shock test were placed in a BeCOM revolving oven and baked in 24 minutes at 205°C. Thereafter, the breads were taken out of the oven, de-panned and placed on a rack to cool for at least 1 hour at ambient temperature, which was typically between 20 and 25 °C. After 1-2 hours cooling, the breads were assessed on weight and volume.

After cooling down to room temperature the weights of the loaves were determined using a Mettler Toledo scale with a precision of 0.01gram. The volumes of the loaves were determined using a Loaf Volumeter (1 Pound Volumeter - National Cereal Chemistry Equipment). Results are shown in Table 8

**Table 8**

| | Relative Volume (%) non shock | Relative Volume (%) shock |
|---|---|---|
| Control | 100 | 100 |
| 10 ppm Bakezyme GO10.000 BG* | 106 | 119 |
| 10 ppm *Penicillium* glucose oxidase | 102 | 117 |
| 5 ppm Bakezyme GO10.000 BG and 5 ppm *Penicillium* glucose oxidase | 105 | 121 |
| * BakeZyme® GO10.000 BG, (*Aspergillus* glucose oxidase as set out in SEQ ID No.3., from DSM Food Specialties, the Netherlands). | | |

The non-shock test results show that the volume of the bread prepared using a combination of glucose oxidases (5 ppm each) showed a volume increase (5%).

The shock test results show that the combination of 5 ppm *Aspergillus* glucose oxidase and 5 ppm *Penicillium* glucose oxidase creates synergy in comparison to 10 ppm *Aspergillus* glucose oxidase or 10 ppm *Penicillium* glucose oxidase under stressful conditions such as in a shock test, creating improved stability, translated in increased volume of the final bread.

Crumb structure evaluation showed that bread containing *Penicillium* glucose oxidase resulted in bread with a finer crumb structure.

These results illustrate that a dough containing a combination of *Penicillium* glucose oxidase with another glucose oxidase results in a baked product with improved stability, translated in increased volume of the final bread and improved crumb structure.

## Claims

1. Use of a composition comprising a combination of glucose oxidases for improving shock resistance of a dough, or the crumb structure of a baked product, wherein the composition comprises a *Penicillium* glucose oxidase which has an amino acid sequence having at least 75% identity to amino acids 19 to 604 of SEQ ID NO. 1 and an *Aspergillus* glucose oxidase comprising an amino acid sequence having at least 85% identity to the amino acid sequence as set out in SEQ ID NO: 3,
wherein shock resistance is determined as set forth in the description and
wherein an improved crumb structure includes a finer crumb structure as compared to a reference and is determined as set forth in the description.

2. A method for preparing a dough comprising combining a pre-mix or a flour comprising a *Penicillium* glucose oxidase which has at least 75% identity to amino acids 19 to 604 of SEQ ID NO: 1 and a second *Aspergillus* glucose oxidase, which has at least 85% identity to SEQ ID NO: 3, with at least one dough ingredient, wherein the at least one dough ingredient is selected from baker's yeast and a chemical leavening system.

3. A dough prepared from a pre-mix or a flour comprising a *Penicillium* glucose oxidase which has at least 75% identity to amino acids 19 to 604 of SEQ ID NO: 1 and a second *Aspergillus* glucose oxidase, which has at least 85% identity to SEQ ID NO: 3, and at least one dough ingredient selected from baker's yeast and a chemical leavening system.

4. The method according to claim 2 or the dough according to claim 3, wherein the flour comprises by weight of flour

   a) 1 to 50 ppm of the *Penicillium* glucose oxidase ; and
   b) 1 to 200 ppm of the second glucose oxidase.

5. A method for preparing a baked product comprising the step of baking the dough according to claim 3 or 4.

## Patentansprüche

1. Verwendung einer Zusammensetzung, die eine Kombination von Glucoseoxidasen umfasst, zur Verbesserung der Stoßbeständigkeit eines Teigs oder der Krumenstruktur eines gebackenen Produkts, wobei die Zusammensetzung eine *Penicillium*-Glucoseoxidase mit einer Aminosäuresequenz mit mindestens 75 % Identität mit den Aminosäuren 19 bis 604 von SEQ ID NO. 1 und eine *Aspergillus*-Glucoseoxidase mit einer Aminosäuresequenz mit mindestens 85 % Identität mit der Aminosäuresequenz gemäß SEQ ID NO. 3 umfasst,
wobei Stressbeständigkeit gemäß den Angaben in der Beschreibung bestimmt wird und
wobei eine verbesserte Krumenstruktur eine feinere Krumenstruktur im Vergleich zu einer Referenz umfasst und gemäß den Angaben in der Beschreibung bestimmt wird.

2. Verfahren zur Herstellung eines Teigs, umfassend das Kombinieren einer Vormischung oder eines Mehls, umfassend eine *Penicillium*-Glucoseoxidase mit einer Aminosäuresequenz mit mindestens 75 % Identität mit den Aminosäuren 19 bis 604 von SEQ ID NO. 1 und eine *Aspergillus*-Glucoseoxidase mit einer Aminosäuresequenz mit mindestens 85 % Identität mit der Aminosäuresequenz gemäß SEQ ID NO. 3, mit mindestens einer Teigzutat, wobei die mindestens eine Teigzutat aus Bäckerhefe und einem chemischen Treibmittelsystem ausgewählt ist.

**3.** Teig, hergestellt aus einer Vormischung oder einem Mehl, umfassend eine *Penicillium*-Glucoseoxidase mit einer Aminosäuresequenz mit mindestens 75 % Identität mit den Aminosäuren 19 bis 604 von SEQ ID NO. 1 und eine Aspergillus-Glucoseoxidase mit einer Aminosäuresequenz mit mindestens 85 % Identität mit der Aminosäuresequenz gemäß SEQ ID NO. 3, und mindestens einer Teigzutat, die aus Bäckerhefe und einem chemischen Treibmittelsystem ausgewählt ist.

**4.** Verfahren nach Anspruch 2 oder Teig nach Anspruch 3, wobei das Mehl, bezogen auf das Mehlgewicht,

a) 1 bis 50 ppm der Penicillium-Glucoseoxidase und
b) 1 bis 200 ppm der zweiten Glucoseoxidase umfasst.

**5.** Verfahren zur Herstellung eines gebackenen Produkts, umfassend den Schritt des Backens des Teigs nach Anspruch 3 oder 4.

## Revendications

**1.** Utilisation d'une composition comprenant une combinaison de glucose oxydases destinée à améliorer la résistance d'une pâte aux chocs ou la structure de la mie d'un produit de boulangerie, dans laquelle la composition comprend une glucose oxydase de *Penicillium* qui a une séquence d'acides aminés ayant une identité d'au moins 75% avec les acides aminés 19 à 604 de la SEQ ID n° : 1 et une glucose oxydase d'*Aspergillus* comprenant une séquence d'acides aminés ayant une identité d'au moins 85% avec la séquence d'acides aminés telle qu'indiquée dans la SEQ ID n° : 3,
dans laquelle la résistance aux chocs est déterminée tel qu'indiqué dans la description et
dans laquelle une structure améliorée de la mie comprend une structure plus fine de la mie, en comparaison avec une référence, et est déterminée tel qu'indiqué dans la description.

**2.** Procédé destiné à préparer une pâte comprenant une combinaison d'un pré-mélange ou d'une farine, comprenant une glucose oxydase de *Penicillium* qui a une identité d'au moins 75% avec les acides aminés 19 à 604 de la SEQ ID n° : 1 et une deuxième glucose oxydase d'*Aspergillus,* qui a une identité d'au moins 85% avec la SEQ ID n° : 3, avec au moins un ingrédient de pâte, dans laquelle l'au moins un ingrédient de pâte est choisi parmi la levure de boulanger et un système de levain chimique.

**3.** Pâte préparée à partir d'un pré-mélange ou d'une farine, comprenant une glucose oxydase de *Penicillium* qui a une identité d'au moins 75% avec les acides aminés 19 à 604 de la SEQ ID n° : 1 et une deuxième glucose oxydase d'*Aspergillus,* qui a une identité d'au moins 85% avec la SEQ ID n° : 3, et d'au moins un ingrédient de pâte choisi parmi la levure de boulanger et un système de levain chimique.

**4.** Procédé selon la revendication 2 ou pâte selon la revendication 3, dans lequel/laquelle la farine comprend, en poids de farine,

a) de 1 à 50 ppm de la glucose oxydase de *Penicillium* ; et
b) de 1 à 200 ppm de la deuxième glucose oxydase.

**5.** Procédé destiné à préparer un produit de boulangerie comprenant l'étape de cuisson de la pâte selon les revendications 3 ou 4.

```
MKSTIITSIL FSVAAVQAYS PAEQIDVQSH LLSDPTKVEG ETYDYVIAGG GLTGLTVAAK    60
LSENPKIKVL VIEKGFYESN DGPIIEDPNA YGEIFGTSVD QNYLTVPLIN NRTGEIKSGL   120
GLGGSTLING DSWTRPDKVQ IDSWEKVFGM EGWNWDNVFQ YMQKAERSRP PTAAQIEAGH   180
FYDPACHGTD GTVHAGPRDN GKPWSPLMRA LMNTVSAFGV PVQKDFHCGH PRGVSMIPNN   240
LHENQIRADA AREWLLPNYQ RDNLQILTGQ KVGKVLFNQT ASGPKAVGVN FGTNKAVNFN   300
VYAKQEVLLA AGSAISPLIL EYSGIGIKSV LDKAGVKQLL ELPVGLNMQD QTTTTVRSRA   360
NNAPGQGQAA YFANFTEVLG DHAAQGIKLL DTKLDQWAEE TVARGGFHNV TALKIQYENY   420
RNWLLDEDVA FAELFFDTEG KINFDIWNLI PFTRGSVHIL SSDPYLWQYA NDPKFFMNEL   480
DLLGQAAATK LGRELSSAGE MKKYYAGETI PGDNLPQDAT VEQWEDYVMM NFRPNWHAVS   540
TCSMMSRELG GVVDATAKVY GTQGLRVIDG SIPPTQVSSH VMTVFYGMAL RIAESVLEDY   600
AKKA                                                                604
```

FIG.1

```
atgaagtcca ctattatcac ctccattctc ttctctgtgg ctgccgtcca ggcctatagc     60
ccggccgagc agatcgacgt ccagtctcac ctgctttctg accccaccaa ggtcgaggga    120
gagacttacg actatgtcat tgctggtggt ggtttgactg gtctgaccgt ggctgccaag    180
ctgtctgaaa acccgaagat caaagtcctt gtgattgaga agggattcta cgaatccaac    240
gatggaccga tcatcgagga ccccaacgcc tatggggaga tctttggaac tagtgtggat    300
cagaattatc tcacagttcc cctcatcaac aaccgaactg ggaaattaa gtctggcctc     360
ggtcttggtg gctcgacctt gatcaacggc gattcctgga cccgccccga caaggtccag    420
atcgactcat gggaaaaggt ctttggcatg gagggctgga actgggacaa tgtcttccag    480
tacatgcaga aagctgagcg ctcgcgcccc ccgactgccg cccagattga agccggtcac    540
ttctacgacc ctgcctgtca tggaacagac ggaaccgttc atgccggccc tcgcgacaac    600
ggcaagcctt ggtccccact gatgcgagcc ctcatgaaca ccgtctccgc tttcggtgtc    660
cccgtccaga aggacttcca ctgcggtcac ccccgtggtg tctcgatgat cccgaacaac    720
ctccatgaga accagatccg ggctgatgcc gctcgcgaat ggcttcttcc caactaccag    780
cgcgataacc tgcagatcct gactggccag aaggtcggaa aggttttgtt caaccagacc    840
gcatctggac ctaaggctgt tggtgtgaac ttcggtacca acaaggctgt taacttcaat    900
gtctacgcca agcaagaagt tctgttggcc gccggatctg ccatttctcc tttgatcctt    960
gaatactccg gtattggtat caagtccgtc cttgacaagg ccggtgttaa gcagctcctc   1020
gaactccctg ttggtctcaa catgcaagac cagaccacta ccactgttcg gtcccgcgcc   1080
aacaacgcac ctggacaagg ccaggccgct tactttgcca acttcaccga ggttctcggc   1140
gaccacgccg cccagggtat taagttgctg gacaccaagc ttgaccagtg ggccgaggag   1200
accgttgccc gcggtggctt ccacaatgtg actgccctca agatccagta tgagaactac   1260
cgtaactggc tccttgatga ggacgttgca tttgccgagc tcttcttcga cactgagggc   1320
aagatcaact ttgatatctg gaatcttatc cccttcactc gcggttccgt ccacatcctc   1380
agcagtgacc cttacctctg gcaatacgca aatgacccca agttcttcat gaacgagctg   1440
gatcttctcg gccaggccgc tgctactaag ctgggtcgtg agctctctag cgctggtgag   1500
atgaagaagt actacgctgg cgagaccatc cccggcgaca acctgcccca ggatgccacc   1560
gtcgagcagt gggaggacta cgtgatgatg aacttccgtc ctaactggca cgctgttagc   1620
acctgctcta tgatgtcccg cgagcttggt ggtgtcgtcg acgctactgc caaggtctac   1680
ggtactcagg gcctccgtgt cattgacgga tctatccctc ccactcaggt gtcctctcac   1740
gttatgaccg ttttctacgg tatggccttg cggatcgccg aatccgtcct tgaagactat   1800
gccaagaaag cttaaa                                                   1816
```

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012001169 A
- WO 2014013074 A
- WO 2010121933 A
- WO 2013007820 A
- WO 2013007821 A


### Non-patent literature cited in the description


- **NEEDLEMAN, S. B. ; WUNSCH, C. D.** *J. Mol. Biol.,* 1970, vol. 48, 443-453
- **RICE,P. ; LONGDEN,L. ; BLEASBY,A.** EMBOSS: The European Molecular Biology Open Software Suite. *Trends in Genetics,* 2000, vol. 16 (6), 276-277, http://emboss.bioinformatics.nl
- **ALTSCHUL et al.** *J. Mol. Biol.,* 1990, vol. 215, 403-10
- **ALTSCHUL et al.** *Nucleic Acids Res.,* 1997, vol. 25 (17), 3389-3402
- **HAWKSWORTH et al.** Ainsworth and Bisby's Dictionary of The Fungi. CAB International, University Press, 1995
- **SAMBROOK et al.** Molecular Cloning: A Laboratory Manual. Cold Spring Harbor Laboratory Press, 1989
- **WITTEVEEN et al.** Glucose oxidase overproducing and negative mutants of Aspergillus niger. *Appl. Microbiol. Biotechnol,* 1990, vol. 33, 683-686